(19) Europäisches Patentamt

European Patent Office

Office européen des brevets

(11) **EP 1 030 798 B1**

(12) **EUROPÄISCHE PATENTSCHRIFT**

(45) Veröffentlichungstag und Bekanntmachung des Hinweises auf die Patenterteilung:
**02.05.2002 Patentblatt 2002/18**

(51) Int Cl.[7]: **B60T 8/24**, B60T 7/12, B60T 8/58

(21) Anmeldenummer: **98947365.7**

(22) Anmeldetag: **30.07.1998**

(86) Internationale Anmeldenummer:
**PCT/DE98/02184**

(87) Internationale Veröffentlichungsnummer:
**WO 99/26823 (03.06.1999 Gazette 1999/22)**

(54) **VERFAHREN UND VORRICHTUNG ZUR STABILISIERUNG EINES FAHRZEUGES BEI KIPPTENDENZ**

METHOD AND DEVICE FOR STABILISING MOTOR VEHICLE TILT

PROCEDE ET DISPOSITIF POUR STABILISER UN VEHICULE EN CAS DE TENDANCE AU BASCULEMENT

(84) Benannte Vertragsstaaten:
**DE FR GB SE**

(30) Priorität: **22.11.1997 DE 19751891**

(43) Veröffentlichungstag der Anmeldung:
**30.08.2000 Patentblatt 2000/35**

(73) Patentinhaber: **ROBERT BOSCH GMBH**
**70442 Stuttgart (DE)**

(72) Erfinder:
• SCHRAMM, Herbert
  D-71229 Leonberg (DE)
• DOMINKE, Peter
  D-74321 Bietigheim-Bissingen (DE)
• LEIMBACH, Klaus-Dieter
  D-71696 Möglingen (DE)
• WETZEL, Gabriel
  D-70569 Stuttgart (DE)

(56) Entgegenhaltungen:
WO-A-97/28017          WO-A-99/01311
DE-A- 3 222 149        DE-A- 4 342 732
DE-A- 19 632 943       US-A- 3 609 313
US-A- 4 386 674        US-A- 4 964 679

• PATENT ABSTRACTS OF JAPAN vol. 013, no. 311 (M-851), 17. Juli 1989 -& JP 01 101238 A (MATSUSHITA ELECTRIC IND CO LTD), 19. April 1989
• ZANTEN VAN A ET AL: "FDR - DIE FAHRDYNAMIK-REGELUNG VON BOSCH" ATZ AUTOMOBILTECHNISCHE ZEITSCHRIFT, Bd. 96, Nr. 11, 1. November 1994, Seiten 674-678, 683 - 689, XP000478694 STUTTGART DE in der Anmeldung erwähnt
• LEIBER, LIMPERT: "Der Elektronische Bremsregler" ATZ AUTOMOBILTECHNISCHE ZEITSCHRIFT., Bd. 71, Nr. 6, Juni 1969, Seiten 181-189, XP002084368 STUTTGART DE

## Beschreibung

Stand der Technik

Die Erfindung betrifft zwei Verfahren und eine Vorrichtung zur Stabilisierung eines Fahrzeuges bei Kipptendenz.

Verfahren und Vorrichtungen zur Stabilisierung eines Fahrzeuges bei Kipptendenz sind aus dem Stand der Technik in vielerlei Modifikationen bekannt.

Aus der DE 32 22 149 C2 ist ein Verfahren und eine Einrichtung zur Vermeidung des Seitwärtskippens eines Fahrzeuges bekannt. Bei diesem Fahrzeug handelt es sich um einen Portalhubwagen. Die Vorrichtung enthält eine Meßeinrichtung zur Berechnung der Höhe des Gesamtschwerpunktes des Fahrzeuges mit der Ladung. Desweiteren enthält sie eine Einrichtung zur Berechnung der statischen Stabilität des Fahrzeuges als kritischer Bezugswert aus dem Quotienten von Fahrzeugspur und zweifacher Höhe des Gesamtschwerpunktes. Ferner enthält die Vorrichtung eine Einrichtung zu Berechnung der dynamischen Instabilität aus dem Quotienten von Fahrzeuggeschwindigkeit im Quadrat und dem Produkt des aus dem jeweiligen Steuerwinkel berechneten Kurvenradius mit der Erdbeschleunigung. Wird der Bezugswert durch die dynamische Instabilität überschritten, so wird die Geschwindigkeit des Fahrzeuges reduziert. Dies geschieht zum einen durch Ansteuerung der Fahrzeugbremsen und zum anderen durch entsprechende Ansteuerung der Motorkupplung.

Aus der WO 97/28017 ist ein Fahrdynamik-Regelungsverfahren und eine entsprechende Vorrichtung für Nutzfahrzeuge, die mit einem ABS-System versehen sind, bekannt. Bei diesem Verfahren bzw. bei dieser Vorrichtung wird eine Abnahme der Kippstabilität des Fahrzeuges während einer Kurvenfahrt anhand des Einsetzens eines ABS-Regeleingriffs ermittelt. Hierzu wird ermittelt, ob die Querbeschleunigung des Fahrzeugs einen für diese vorgegebenen Grenzwert überschreitet. Überschreitet die Querbeschleunigung diesen Grenzwert, so wird ein relativ zur maximal möglichen Bremskraft geringer Bremseneingriff eingeleitet. Danach wird durch Messung der Stromversorgung am Stecker der Zugmaschine oder am ABS-Ventil überwacht, ob das ABS-System anspricht. Wird ein Ansprechen festgestellt, so wird ein Alarmsignal ausgelöst und/ oder es wird ein die Kippstabilität vergrößernder Regeleingriff, beispielsweise eine Bremsung, durchgeführt.

Die nicht vorveröffentlichte DE 196 32 943 A1 offenbart ein Verfahren zum Betrieb eines Kraftfahrzeuges mit einer Bremsanlage, mit der achsgleiche Räder unabhängig voneinander gebremst werden können. Bei dem Verfahren werden mittels der Bremsanlage selbsttätig fahrstabilisierende Bremseingriffe vorgenommen. Es wird laufend wenigstens ein Momentanwert für eine, für die Fahrzeugkipptendenz um die Fahrzeuglängsachse indikative fahrdynamische Kenngröße mit einem zugehörigen Kippverhinderungs-Schwellwert verglichen. Sobald einer der Momentanwerte den zugehörigen Schwellwert überschreitet, werden die kurvenäußeren Räder zwecks Kippverhinderung gebremst.

Die DE 43 42 732 A1 schlägt die Ausstattung eines Tankfahrzeuges mit Sensoren zur Überwachung der Kippneigung des Tankfahrzeuges vor. Als Sensoren sind u.a. solche zur Erfassung der Radlasten vorgesehen. Die Sensoren sind mit einer Auswertungsschaltung verbunden. Wird eine potentielle Kippgefahr festgestellt, so wird u.a. automatisch die Fahrgeschwindigkeit des Tankfahrzeuges über das Antriebs- und/oder Bremssystem gedrosselt.

Die Auswertung einer die Änderung des Schlupfes beschreibenden Größe und/oder einer den Durchmesser oder den Radius eines Rades beschreibenden Größe zeigt keine der vorstehend aufgeführten Schriften. Auch ist keiner dieser Schriften die Durchführung eines gezielten Bremseneingriffs am kurvenäußeren Vorderrad zu entnehmen.

Ausgehend von der DE 43 42 732 A1 ergibt sich für den Fachmann folgende Aufgabe: Es soll ein Verfahren zur Stabilisierung eines Fahrzeuges bei Kipptendenz, mit dem ein Umkippen des Fahrzeuges vermieden wird, bereitgestellt werden, welches zur Ermittlung der Kipptendenz zu den Radlasten alternative Größen verwendet und welches bei einer vorliegenden Kipptendenz zur Stabilisierung des Fahrzeuges einen alternativen Eingriff in die Bremsanlage ermöglicht.

Die Verwendung von zu den Radlasten alternativen Größen zur Ermittlung der Kipptendenz zeigen die Ansprüche 1 und 14. Die Durchführung eines alternativen Eingriffes in die Bremsanlage bei einer vorliegenden Kipptendenz zeigt der Anspruch 13.

Vorteile der Erfindung

Mit dem ersten erfindungsgemäßen Verfahren wird ein Fahrzeug bei Kipptendenz stabilisiert. Hierzu wird für wenigstens ein Rad eine das Radverhalten des entsprechenden Rades quantitativ beschreibende Größe ermittelt. Ferner wird wenigstens in Abhängigkeit der für das wenigstens eine Rad ermittelten Größe, die das Radverhalten quantitativ beschreibt, ermittelt, ob für das Fahrzeug eine Kipptendenz um eine in Längsrichtung des Fahrzeuges orientierte Fahrzeugachse vorliegt. Liegt eine Kipptendenz vor, so werden wenigstens an wenigstens einem Rad des Fahrzeuges stabilisierende Bremseneingriffe durchgeführt.

Erfindungsgemäß wird als Größe, die das Radverhalten quantitativ beschreibt, für wenigstens ein Rad eine den Schlupf beschreibende Größe und/oder eine den Durchmesser oder den Radius des jeweiligen Rades beschreibende Größe ermittelt. In Abhängigkeit der Größe, die die Änderung des Schlupfes des jeweiligen Rades beschreibt oder in Abhängigkeit der den Durchmesser oder den Radius des jeweiligen Rades beschreibenden Größe wird ermittelt, ob für das Fahrzeug eine Kipptendenz um eine in Längsrichtung des Fahrzeuges orientierte Fahrzeugachse vorliegt. Mit diesem Verfahren wird ein Umkippen des Fahrzeuges vermieden.

Die Verwendung der beiden vorstehend genannten Größen hat folgenden Vorteil: Diese Größen hängen jeweils unmittelbar mit dem Radverhalten zusammen. Da sich ein Umkippen des Fahrzeuges zunächst im Radverhalten bemerkbar macht, ergibt sich aufgrund der Auswertung dieser Größen mit Blick auf den Zeitpunkt des Erkennens einer Umkipptendenz ein zeitlicher Vorteil.

An dieser Stelle sei bemerkt, wenn nachfolgend der Begriff "Kipptendenz des Fahrzeuges" verwendet wird, so sei die "Kipptendenz des Fahrzeuges um eine in Längsrichtung des Fahrzeuges orientierte Fahrzeugachse" gemeint. Die Formulierung "eine in Längsrichtung des Fahrzeuges orientierte Fahrzeugachse" ist folgendermaßen zu verstehen: Zum einen kann es sich bei der Fahrzeugachse, um die eine Kipptendenz des

Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Für das wenigstens eine Rad, als die das Radverhalten des jeweiligen Rades quantitativ beschreibende Größe, kann eine Größe ermittelt werden, die den Durchmesser oder den Radius des jeweiligen Rades beschreibt. Diese Größe wird vorteilhaft wenigstens in Abhängigkeit einer die Raddrehzahl des entsprechenden Rades beschreibenden Größe, einer die Fahrzeuggeschwindigkeit beschreibenden Größe, einer die Querdynamik des Fahrzeugs repräsentierenden Größe und einer die Geometrie des Fahrzeuges beschreibenden Größe ermittelt. Hierfür wird vorteilhafterweise als die die Querdynamik des Fahrzeuges repräsentierende Größe eine die Gierrate des Fahrzeuges und/oder eine die Querbeschleunigung des Fahrzeuges beschreibende Größe ermittelt, und die die Fahrzeuggeschwindigkeit beschreibende Größe wenigstens in Abhängigkeit von den für die Räder ermittelten Größen, die die Raddrehzahlen beschreiben, ermittelt.

Zur Erkennung der Kipptendenz eines Fahrzeuges bietet sich vorteilhafterweise folgende Vorgehensweise an: Für wenigstens ein Rad wird eine die Raddrehzahl beschreibende Größe ermittelt. Ferner wird werigstens eine die Querdynamik des Fahrzeuges repräsentierende Größe ermittelt. Wenigstens in Abhängigkeit von einer der die Querdynamik des Fahrzeugs repräsentierenden Größen, werden an wenigstens einem Rad kurzzeitig Bremsmomente und/oder Antriebsmomente erzeugt und/oder verändert. Während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, wird für dieses wenigstens eine Rad, wenigstens in Abhängigkeit von der die Raddrehzahl dieses Rades beschreibenden Größe die das Radverhalten quantitativ beschreibende Größe ermittelt. Zur Erkennung der Kipptendenz des Fahrzeuges, wird während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, die Größe ermittelt, die die Änderung des Schlupfes des jeweiligen Rades beschreibt. Eine Kipptendenz des Fahrzeuges um eine in Längsrichtung des Fahrzeuges orientierte Fahrzeugachse liegt dann vor, wenn der Betrag der sich ergebenden Änderung der das Radverhalten quantitativ beschreibenden Größe, größer als ein entsprechender Schwellenwert ist.

In diesem Fall wird als die das Radverhalten quantitativ beschreibende Größe die Größe verwendet, die den Schlupf beschreibt. D.h. während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, wird die Größe ermittelt, die die Änderung des Schlupfes des jeweiligen Rades beschreibt. Folglich liegt eine Kipptendenz des Fahrzeuges dann vor, wenn der Betrag der Größe, die die Änderung des Schlupfes des jeweiligen Rades beschreibt, größer als ein entsprechender Schwellenwert ist.

Vorteilhafterweise wird wenigstens in Abhängigkeit einer der ermittelten die Querdynamik des Fahrzeuges repräsentierenden Größen festgestellt, welche Räder des Fahrzeuges zur Erkennung der Kipptendenz des Fahrzeuges geeignet sind. Die Erkennung der Kipptendenz des Fahrzeuges wird vorteilhafterweise anhand wenigstens eines dieser Räder durchgeführt, indem an wenigstens einem dieser Räder kurzzeitig Bremsmomente und/oder Antriebsmomente erzeugt und/oder verändert werden. Insbesondere werden hierbei vorteilhafter weise die sich auf der Kurveninnenseite befindenden Räder des Fahrzeuges ausgewählt.

Gemäß einer zweiten vorteilhaften Erkennung liegt für das Fahrzeug eine Kipptendenz dann vor, wenn für wenigstens ein Rad der Wert der den Durchmesser oder den Radius beschreibenden Größe größer als ein erster Schwellenwert ist oder wenn für wenigstens ein Rad der Wert der den Durchmesser oder den Radius beschreibenden Größe, kleiner als ein zweiter Schwellenwert ist, und/oder wenn für wenigstens ein Rad der Betrag einer Differenz, die aus dem Wert der den Durchmesser oder den Radius beschreibenden Größe, und einem Vergleichswert gebildet wird, größer als ein entsprechender Schwellenwert ist, und/oder wenn für wenigstens ein Rad der Betrag einer Größe, die den zeitlichen Verlauf der den Durchmesser oder den Radius beschreibenden Größe beschreibt, kleiner als ein entsprechender Schwellenwert ist, und/oder wenn der Betrag einer den Neigungswinkel einer Radachse beschreibenden Größe größer als ein entsprechender Schwellenwert ist. Hierbei können für die Räder der entsprechenden Radachse jeweils die den Durchmesser oder den Radius beschreibenden Größen ermittelt werden, und in Abhängigkeit dieser Größen die den Neigungswinkel der Radachse beschreibende Größe ermittelt werden. Für das Fahrzeug liegt die Kipptendenz dann vor, wenn der Betrag einer Differenz, die aus einer die Fahrzeuggeschwindigkeit beschreibenden Größe und einem Geschwindigkeitsgrenzwert gebildet wird, kleiner als ein entsprechender Schwellenwert ist.

Von besonderem Vorteil ist, wenn wenigstens am kurvenäußeren Vorderrad des Fahrzeuges stabilisierende Bremseneingriffe dergestalt durchgeführt werden, daß an diesem Rad ein Bremsmoment erzeugt und/oder erhöht wird. Vorteilhafterweise werden zur Stabilisierung des Fahrzeuges ferner Motoreingriffe und/oder Eingriffe in Fahrwerksaktuatoren durchgeführt.

Die erfindungsgemäße Vorrichtung zur Stabilisierung eines Fahrzeuges bei Kipptendenz, mit der ein Umkippen des Fahrzeuges vermieden wird, enthält Mittel, mit denen bei Vorliegen einer Kipptendenz um eine in längsrichtung des Fahrzeuges orientierte Fahrzeugachse wenigstens an wenigstens einem Rad des Fahrzeuges stabilisierende Bremseneingriffe durchgeführt werden. Ferner enthält die Vorrichtung Mittel, mit denen für wenigstens ein Rad eine Größe ermittelt wird, die die Änderung des Schlupfes des jeweiligen Rades beschreibt und mit denen in Abhängigkeit dieser Größe ermittelt wird, ob für das Fahrzeug die Kipptendenz vorliegt. Alternativ bzw. ergänzend enthält die Vorrichtung Mittel, mit denen eine den Durchmesser oder den Radius des jeweiligen Rades beschreibende Größe ermittelt wird, und weitere Mittel, mit denen in Abhängigkeit der den Durchmesser oder den Radius des jeweiligen Rades beschreibenden Größe ermittelt wird, ob für das Fahrzeug die Kipptendenz vorliegt.

In eines Erfindungs variante wird ermittelt, ob für das Fahrzeug eine Kipptendenz um eine in Längsrichtung des Fahrzeuges orientierte Fahrzeugachse vorliegt, wobei an wenigstens einem Rad des Fahrzeuges Stabilisierende Bremseneingriffe durchgeführt werden. Bei Vorliegen einer Kipptendenz wird gezielt nur am kurvenäußeren Vorderrad des Fahrzeuges der stabilisierende Bremseneingriff durchgeführt. Mit dem zweiten erfindungsgemäßen Verfahren wird ein Fahrzeug bei einer Kipptendenz stabilisiert, d.h. mit dem Verfahren wird ein Umkippen des Fahrzeuges vermieden.

Die Durchführung des gezielten Bremseneingriffs am kurvenäußeren Vorderrad hat folgenden Vorteil: Der Stand der Technik schlägt lediglich solche Bremseneingriffe vor, mit denen eine Reduzierung der Fahrzeuggeschwindigkeit erreicht wird. Mit dieser Art der Bremseneingriffe kann, da keines der Räder gezielt gebremst wird, kein gezieltes Giermoment auf das Fahrzeug aufgebracht werden. Da sich ein Fahrzeug vor dem Umkippen stark übersteuernd verhält, kann durch einen gezielten Bremseneingriff an dem kurvenäußeren Vorderrad ein Bremsmoment erzeugt werden. Durch diesen Bremseingriff wird ein stabilisierendes Giermoment erzeugt.

Weitere Vorteile sowie vorteilhafte Ausgestaltungen können den Unteransprüchen, der Zeichnung sowie der Beschreibung der Ausführungsbeispiele entnommen werden.

Zeichnung

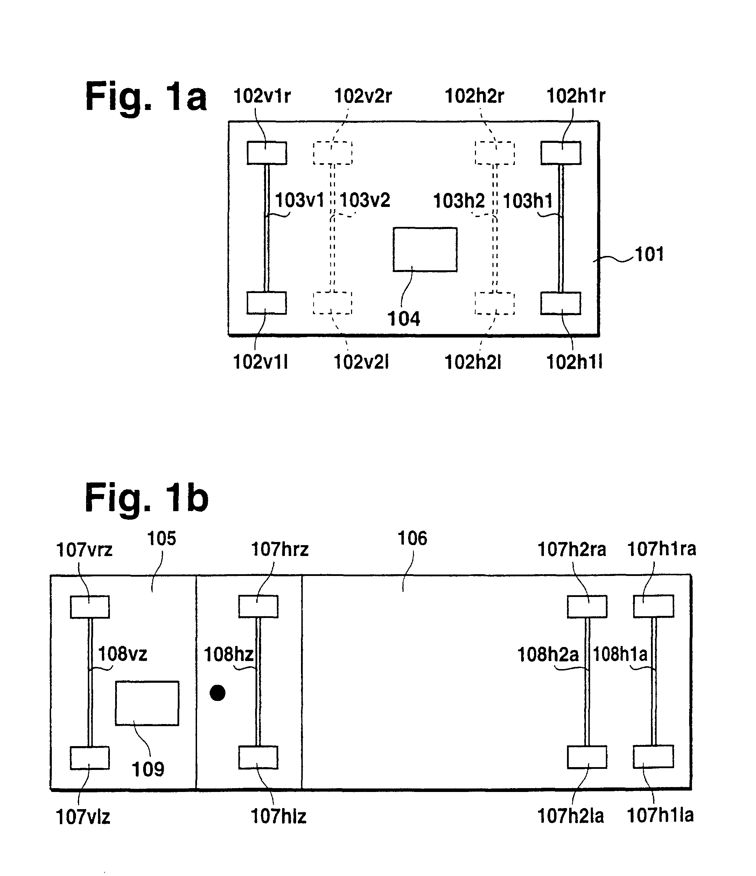

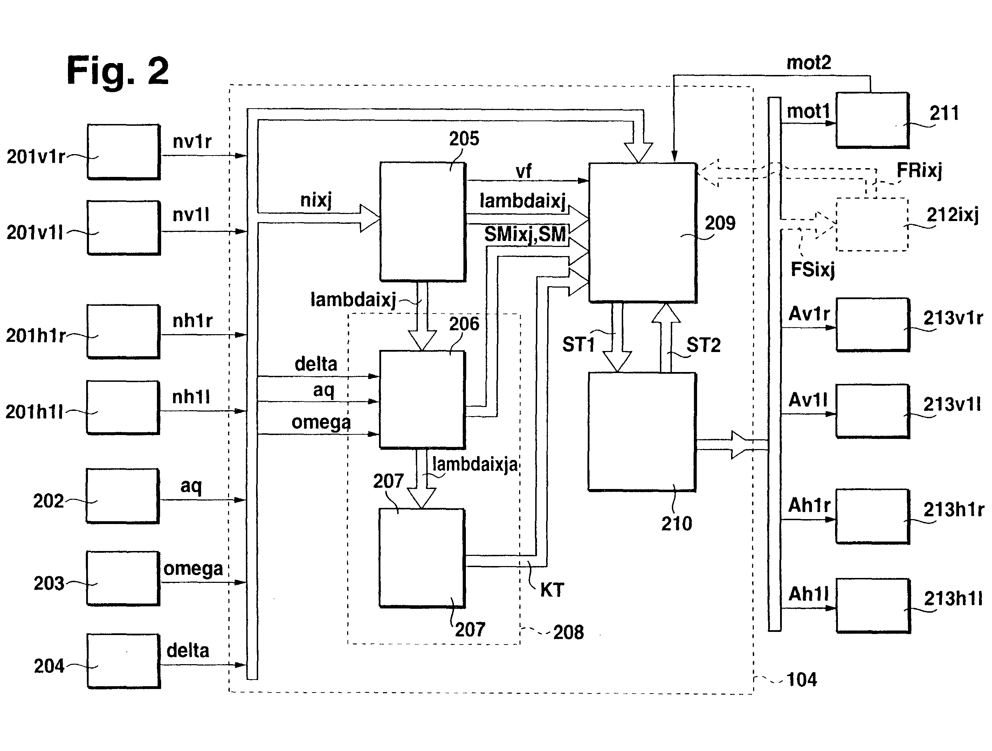

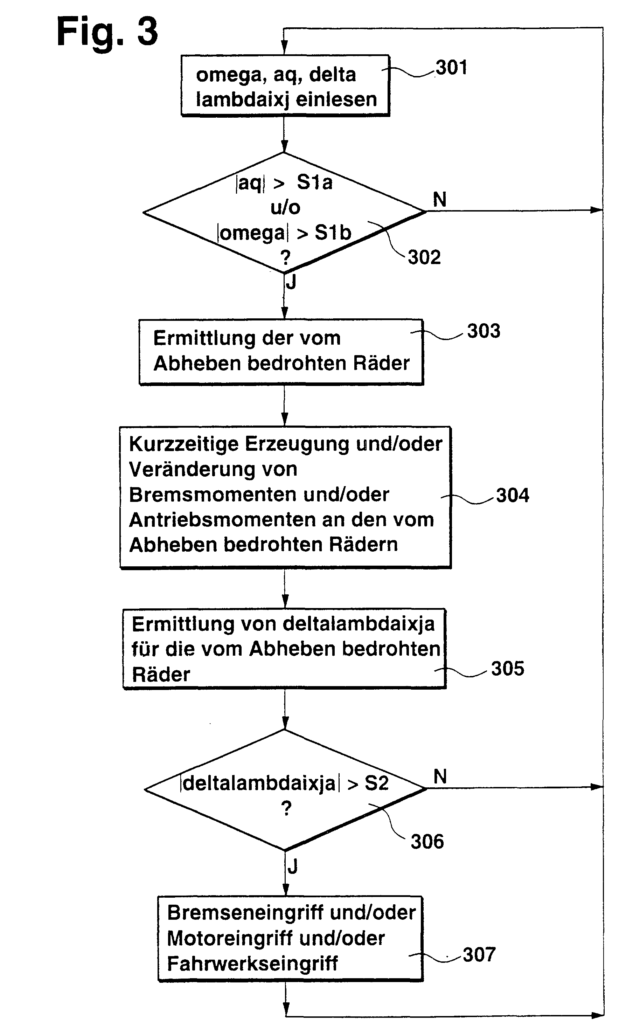

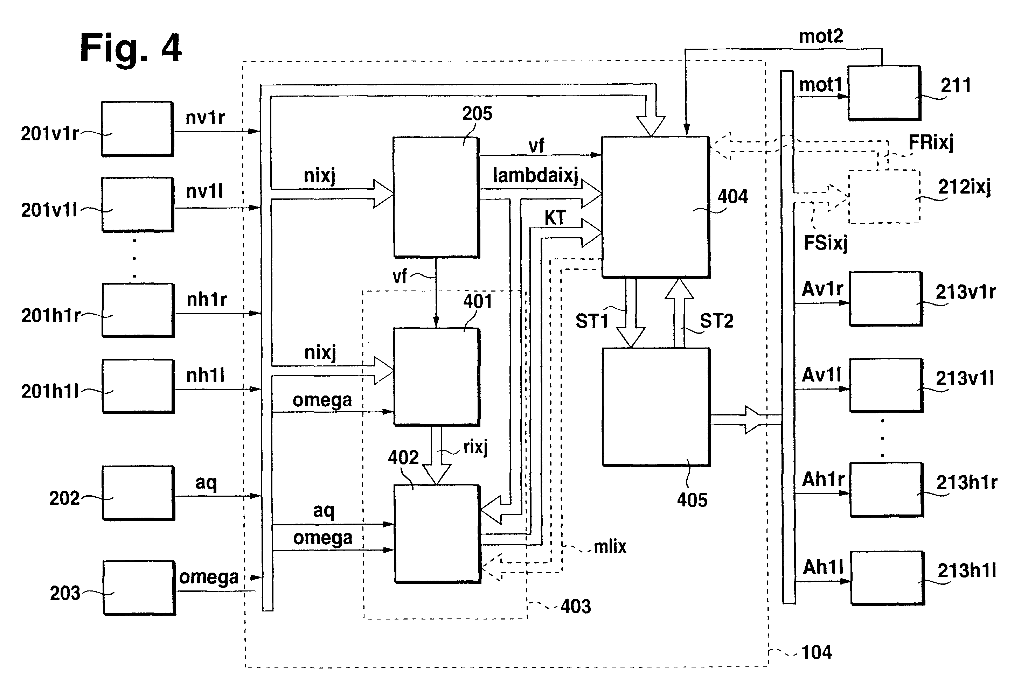

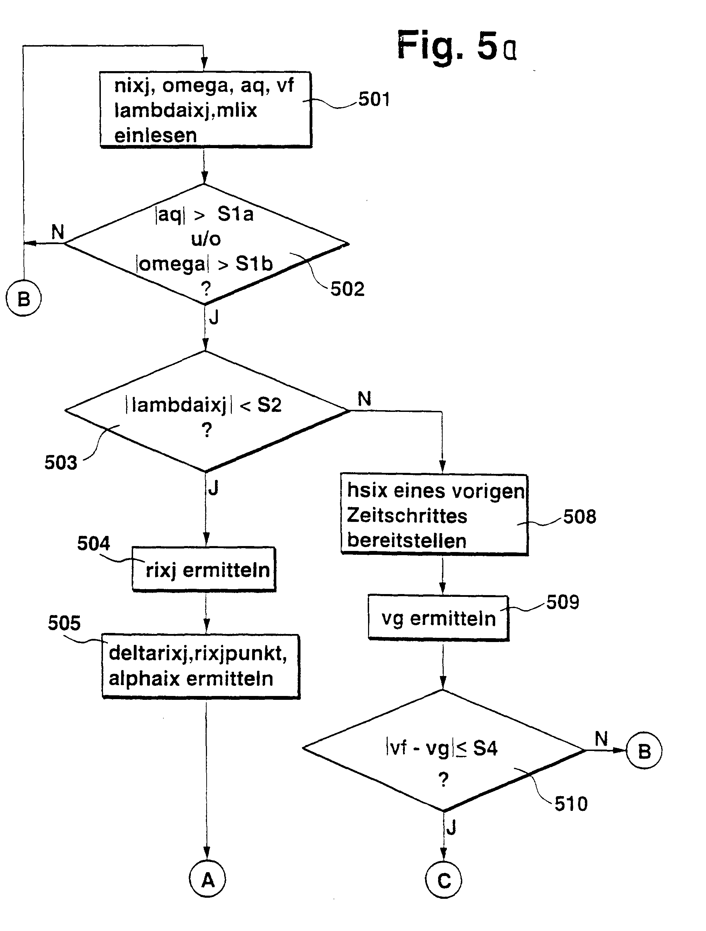

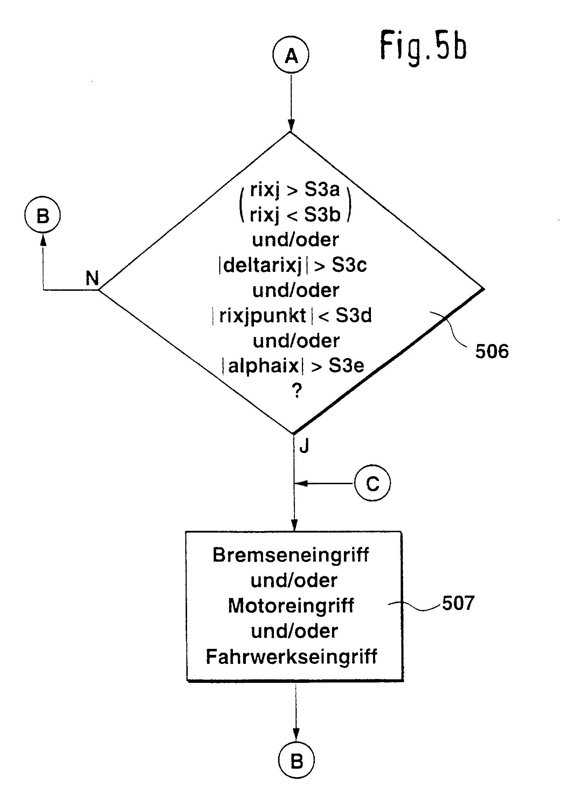

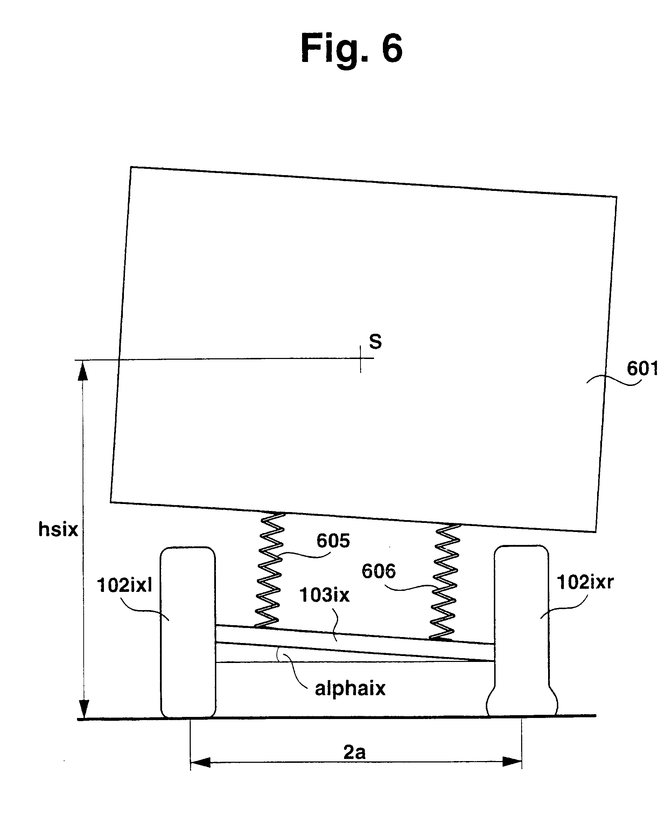

Die Zeichnung besteht aus den Figuren 1 bis 6. Die Figuren 1a und 1b zeigen verschiedene Straßenfahrzeuge, bei denen das erfindungsgemäße Verfahren eingesetzt wird. Die Figuren 2 und 4 zeigen jeweils in einer Übersichtsanordnung zwei verschiedene Ausführungsbeispiele der erfindungsgemäßen Vorrichtung zur Durchführung des erfindungsgemäßen Verfahrens. Die Figuren 3 und 5a und 5b zeigen jeweils mit Hilfe eines Ablaufdiagrammes die zur Durchführung des erfindungsgemäßen Verfahrens im jeweiligen Ausführungsbeispiel wesentlichen Schritte. Figur 6 stellt in einer schematischen Darstellung den physikalischen Sachverhalt für ein Straßenfahrzeug bei Kurvenfahrt dar.

Es sei darauf hingewiesen, daß Blöcke mit derselben Bezeichnung in unterschiedlichen Figuren die selbe Funktion haben.

Ausführungsbeispiele

Zunächst soll auf die Figuren 1a und 1b eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet ist. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (l) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, mit dem eine Kipptendenz der Zugmaschine 105 und/oder eine Kipptendenz des Aufliegers 106 und/oder eine Kipptendenz der gesamten Fahrzeugkombination um eine in Längsrichtung orientierte Fahrzeugachse erkannt wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur 1a dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein. Ferner ist es denkbar, sowohl das Zugfahrzeug 105 als auch den Auflieger 106 mit einem Steuergerät auszustatten.

Die in den Figuren 1a und 1b gewählte Kennzeichnung durch die Indizes a, i, j, x sowie z ist für sämtliche Größen bzw. Komponenten, bei denen sie Verwendung findet, entsprechend.

Die erfindungsgemäße Vorrichtung bzw. das erfindungsgemäße Verfahren betrifft die Stabilisierung eines Fahrzeuges bei Kipptendenz um eine in Längsrichtung des Fahrzeuges orientierte Fahrzeugachse. In dieser Anmeldung werden zwei Ausführungsbeispiele vorgestellt, denen unterschiedliche Erkennungen der Kipptendenz zugrunde liegen.

Zunächst soll mit Hilfe der Figuren 2 und 3 das erste Ausführungsbeispiel beschrieben werden.

Bei dem Fahrzeug handelt es sich, wie in Figur 1a dargestellt, um ein einteiliges Fahrzeug. Ferner sei angenommen, daß dieses einteilige Fahrzeug wenigstens zwei Radachsen 103ix aufweist. Bei diesen beiden Radachsen soll es sich um die Vorderachse 103v1 mit den Rädern 102v1r bzw. 102v1l sowie um die Hinterachse 103h1 mit den Rädern 102h1r bzw. 102h11 handeln. Die zu diesen Rädern gehörenden Raddrehzahlsensoren 201v1r, 201v1l, 201h1r bzw. 201h1l sind in Figur 2 dargestellt. Je nach Anzahl der Radachsen des einteiligen Fahrzeuges können, wie in Figur 2 angedeutet, weitere Raddrehzahlsensoren 201ixj berücksichtigt werden. Mit den Raddrehzahlsensoren 201ixj werden die Größen nixj ermittelt, die jeweils die Raddrehzahl des entsprechenden Rades 102ixj beschreiben. Die Raddrehzahlsensoren 201ixj sind unabhängig von der Art des Reglers 209 auf jeden Fall vorhanden und die mit ihnen erzeugten Größen nixj werden unabhängig von der Art des in der erfindungsgemäßen Vorrichtung implementierten Reglers 209 auf jeden Fall Blöcken 205 sowie 209 zugeführt.

In Abhängigkeit der Art des in der Vorrichtung implementierten Reglers 209 stehen verschiedene Sensoren zur Verfügung. Handelt es sich bei dem Regler 209 um einen Bremsschlupfregler, der aufgrund der in ihm ablaufenden Regelung in die Radbremsen eingreift und/oder handelt es sich bei dem Regler 209 um einen Antriebsschlupfregler, der aufgrund der in ihm ablaufenden Regelung in die Radbremsen und/oder in den Motor eingreift, so sind die Raddrehzahlsensoren 201ixj, wie bereits oben angedeutet, auf jeden Fall vorhanden. In diesem Fall ist allerdings kein Querbeschleunigungssensor 202, kein Gierratensensor 203 und auch kein Lenkwinkelsensor 204 vorhanden. Folglich müssen in diesen Fällen, falls die Querbeschleunigung und/oder die Gierrate des Fahrzeuges und/oder der Lenkwinkel benötigt werden, diese Größen aus den Raddrehzahlen nixj in bekannter Weise im Regler 209 bzw. im Block 206 hergeleitet werden. In diesem Fall sind die in Figur 2 für den Block 206 eingezeichneten Zuführungen der Größen aq, delta sowie omega durch eine Zuführung der Größen nixj zu ersetzen. An dieser Stelle sei bemerkt, daß in Figur 2 auf eine entsprechende Darstellung verzichtet wurde, was allerdings keine Einschränkung darstellen soll.

Handelt es sich dagegen bei dem Regler 209 um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt - solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt -, so sind - wie in Figur 2 eingezeichnet - neben den Raddrehzahlsensoren 201ixj auch ein Querbeschleunigungssensor 202, ein Gierratensensor 203 und ein Lenkwinkelsensor 204 vorhanden. In diesem Fall können im Regler 209 bzw. im Block 206 die mit Hilfe der entsprechenden Sensoren ermittelten Größen verarbeitet werden. Dieser Fall ist in Figur 2 dargestellt. An dieser Stelle sei noch bemerkt, daß für diesen Fall, d.h. wenn der Querbeschleunigungssensor und/oder der Gierratensensor und/oder der Lenkwinkelsensor ausfallen sollte, die entsprechende Größe ebenfalls aus den Raddrehzahlen hergeleitet werden kann.

Die in Figur 2 gewählte Darstellung soll keine Einschränkung darstellen. In Abhängigkeit der Art des implementierten Reglers sind, wie oben angedeutet, eventuell leichte Modifikationen erforderlich.

Im folgenden sei angenommen, daß das Fahrzeug 101 einen Querbeschleunigungssensor 202, einen Gierratensensor 203 sowie einen Lenkwinkelsensor 204 enthält. Die die Querbeschleunigung des Fahrzeugs beschreibende Größe aq, die die Gierrate des Fahrzeuges beschreibende Größe omega und die den Lenkwinkel des Fahrzeuges beschreibende Größe delta werden Blöcken 206 sowie 209 zugeführt.

Im Block 205 wird in bekannter Weise aus den Größen nixj eine die Fahrzeuggeschwindigkeit beschreibende Größe vf ermittelt. Diese Größe vf wird dem Block 209 zugeführt. Ferner werden im Block 205 ausgehend von den Größen nixj, sowie der Größe vf, in bekannter Weise Größen lambdaixj ermittelt, die den Antriebs- und/oder Bremsschlupf der Räder beschreiben. Diese Größen lambdaixj werden sowohl dem Block 206 als auch dem Block 209 zugeführt.

Zum einen werden im Block 206 die Räder des Fahrzeuges ermittelt, die aufgrund des Fahrzustandes vom Abheben bedroht sind. Mit anderen Worten, es werden die Räder des Fahrzeuges ermittelt, die zur Erkennung einer Kipptendenz des Fahrzeuges um eine in Längsrichtung des Fahrzeuges orientierte Fahrzeugachse geeignet sind.

Die Ermittlung dieser Räder geschieht wenigstens in Abhängigkeit von einer der ermittelten, die Querdynamik des Fahrzeuges repräsentierenden Größen delta bzw. aq bzw. omega, die dem Block 206 zugeführt werden. Hierzu wird im Block 206 aus der den Lenkwinkel beschreibenden Größe delta und/oder aus der die Querbeschleunigung des Fahrzeuges beschreibenden Größe aq und/oder aus der die Gierrate des Fahrzeuges beschreibenden Größe omega eine Größe ermittelt, ausgehend von der erkennbar ist, ob und was für eine Kurve, d.h. Linksoder Rechtskurve, das Fahrzeug durchfährt.

Prinzipiell ist es ausreichend, die kurveninneren Räder zu ermitteln, da bei einem Kippvorgang die kurveninneren Räder des Fahrzeuges für gewöhnlich zuerst abheben bzw. da sich ein beginnender Kippvorgang eines Fahrzeuges durch ein Abheben der kurveninneren Räder "ankündigt". Eine Verfeinerung der Feststellung dahingehend, daß festgestellt wird, ob das kurveninnere Vorderrad oder das kurveninnere Hinterrad stärker vom Abheben bedroht ist, ist denkbar. Dies ist vor dem Hintergrund von Bedeutung, daß in Abhängigkeit der Fahrzeuggeometrie und/oder der Beladung des Fahrzeuges eher das kurveninnere Vorderrad oder das kurveninnere Hinterrad vom Abheben bedroht ist. In diesem Fall ist, wie oben beschrieben, eine Größe zu ermitteln, die beispielsweise vom Lenkwinkel, der Querbeschleunigung des Fahrzeuges und der Gierrate des Fahrzeuges abhängig ist. Die für die vom Abheben bedrohten Räder ermittelten Größen (lambdaixja) sind in Figur 2 mit dem nachgestellten Index "a" gekennzeichnet.

Zum anderen werden im Block 206, wenn die vom Abheben bedrohten Räder bekannt sind, Signale SMixj bzw. SM erzeugt, ausgehend von denen an wenigstens einem der vom Abheben bedrohten Rädern kurzzeitig Bremsmomente und/oder Antriebsmomente erzeugt und/oder verändert werden. Da die vom Abheben bedrohten Räder empfindlich gegenüber Veränderungen der Raddynamik reagieren, kann beispielsweise durch Auswertung der Schlupfwerte der vom Abheben bedrohten Räder festgestellt werden, ob für das Fahrzeug eine Kipptendenz vorliegt oder nicht.

Ferner ist es denkbar, bei der Ermittlung der Räder des Fahrzeuges, die vom Abheben bedroht sind, und die sich somit zur Erkennung einer Kipptendenz des Fahrzeuges eignen, und/oder bei der kurzzeitigen Erzeugung und/oder Veränderung der Bremsmomente und/oder Antriebsmomente an wenigstens einem Rad, zusätzlich das Antriebskonzept des Fahrzeuges, d.h. ob es sich um ein Fahrzeug mit Vorder- oder Hinter- oder Allradantrieb handelt, zu berücksichtigen. Letzteres kann beispielsweise durch eine entsprechende Beeinflussung der Größen SMixj bzw. SM erreicht werden.

Sind an den Rädern des Fahrzeuges keine individuellen Bremseneingriffe möglich, sei es daß die implementierte Bremsanlage dies nicht zuläßt, oder daß dies aufgrund eines vorliegenden Fahrzeugzustandes nicht möglich ist, so entfällt in diesem Fall die Ermittlung der vom Abheben bedrohten Räder. In diesem Fall werden an allen Rädern des Fahrzeuges gleichzeitig kurzzeitig Bremsmomente und/oder Antriebsmomente erzeugt und/oder verändert.

Die in Block 206 erzeugten Größen SMixj sowie SM werden dem Block 209 zugeführt. Ausgehend von den Größen SMixj werden die den Rädern zugeordneten Aktuatoren 213ixj, mit denen Bremsmomente erzeugbar sind, angesteuert. Ausgehend von der Größe SM wird ein dem Motor 211 zugeordnetes Mittel, mit dem das vom Motor abgegebene Motormoment beeinflußbar ist, angesteuert. Die Größen SMixj sowie SM werden dabei im Block 206 so erzeugt, daß an den jeweiligen vom Abheben bedrohten Rädern kurzzeitig ein Bremsmoment und/oder ein Antriebsmoment erzeugt und/oder verändert wird. Dabei wird durch geeignete Ansteuerung des dem jeweiligen vom Abheben bedrohten Rades zugeordneten Aktuators 213ixj ein geringes Bremsmoment aufgebaut und/oder es ergibt sich eine geringfügige Änderung eines bereits erzeugten Bremsmomentes. Dabei wird durch geeignete Ansteuerung des dem Motor des Fahrzeuges zugeordnetes Mittels und den den Rädern zugeordneten Aktuatoren 213ixj ein geringes Antriebsmoment erzeugt und/oder es ergibt sich eine geringfügige Änderung eines bereits erzeugten Antriebsmomentes.

Die Schlupfwerte lambdaixja der vom Abheben bedrohten Räder werden ausgehend vom Block 206 einem Block 207 zugeführt. Die beiden Blöcke 206 bzw. 207 sind zu einem Block 208 zusammengefaßt.

Im Block 207 wird ausgehend von den ihm zugeführten Größen lambdaixja die Erkennung, ob eine Kipptendenz des Fahrzeuges um eine Längsrichtung des Fahrzeuges orientierte Fahrzeugachse vorliegt, durchgeführt. Hierzu wird zunächst für wenigstens ein Rad, welches vom Abheben bedroht ist, die Änderung deltalambdaixja der entsprechenden das Radverhalten quantitativ beschreibenden Größe ermittelt. Dabei wird die die Änderung deltalambdaixja während der Zeitdauer, in der die Bremsmomente und/oder die Antriebsmomente an dem jeweiligen Rad kurzzeitig erzeugt und/oder verändert werden und/oder nachdem die Bremsmomente und/oder die Antriebsmomente an dem jeweiligen Rad kurzzeitig erzeugt und/oder verändert wurden ermittelt.

In Abhängigkeit der Änderung deltalambdaixja der das Radverhalten quantitativ beschreibenden Größe wird ermittelt, ob für das Fahrzeug eine Kipptendenz vorliegt. Ist der Betrag der Größe deltalambdaixja größer als ein entsprechender Schwellenwert, so liegt eine Kipptendenz des Fahrzeuges vor. In diesem Fall wird im Block 207 eine Größe KT erzeugt, die ausgehend vom Block 207 dem Block 209 zugeführt wird. Durch diese Größe KT wird dem Regler bzw. Fahrzeugregler 209 mitgeteilt, ob eine Kipptendenz des Fahrzeuges vorliegt oder nicht.

Mit 209 ist der im Steuergerät 104 implementierte Regler bzw. Fahrzeugregler bezeichnet. Bei dem Regler 209 handelt es sich beispielsweise um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. An dieser Stelle sei auf die vorstehend erwähnte Veröffentlichung "FDR - die Fahrdynamikregelung von Bosch" verwiesen. Die im Block 209 in ihrer Grundfunktion stattfindende Regelung basiert in bekannter Weise auf den dem Block 209 zugeführten Größen nixj, delta, aq, omega, vf, lambdaixj, einer Größe mot2, die beispielsweise die Motordrehzahl des Motors 211 beschreibt und die ausgehend von dem Motor 211 dem Block 209 zugeführt wird, sowie Größen ST2, die ausgehend von einem Block 210, welcher die Ansteuerlogik für die im Fahrzeug enthaltenen Aktuatoren darstellt, dem Block 209 zugeführt werden.

Zusätzlich zu der im Block 209 in der Grundfunktion implementierten Regelung ist in ihm eine Umkippvermeidung implementiert. Im Rahmen der Umkippvermeidung erfüllt der Regler im wesentlichen zwei Aufgaben. Zum einen setzt er die Größen SMixj bzw. SM in entsprechende Signal ST1 um, die der Ansteuerlogik 210 zugeführt werden, und ausgehend von denen an den vom Abheben bedrohten Rädern kurzzeitig Bremsmomente und/oder Antriebsmomente erzeugt und/oder verändert werden. Zum anderen führt er ausgehend von den ihm zugeführten Größen KT die eigentliche Umkippvermeidung durch. Diese Umkippvermeidung kann der Regelung der Grundfunktion quasi übergeordnet sein.

Mit den Größen KT kann dem Regler 209 zum einen mitgeteilt werden, daß eine Kipptendenz des Fahrzeuges um eine in Längsrichtung des Fahrzeuges orientierte Fahrzeugachse vorliegt, außerdem kann dem Regler 209 mitgeteilt werden, wie stark diese Kipptendenz ist, bzw. wie bzw. über welche Räder das Fahrzeug zu kippen droht.

Der Regler 209 erzeugt Größen ST1, die der Ansteuerlogik 210, mit der die dem Fahrzeug zugeordneten Aktuatoren angesteuert werden, zugeführt werden. Mit den Größen ST1 wird der Ansteuerlogik 210 mitgeteilt, welche Aktuatoren wie angesteuert werden sollen. Dabei werden die Größen ST1 sowohl für die Regelung der Grundfunktion als auch für die Erkennung der Kipptendenz bzw. für die Umkippvermeidung ermittelt. Bzgl. der Erzeugung der Größen ST1 gemäß der für die Grundfunktion implementierten Regelung wird auf die vorstehend aufgeführte Veröffentlichung "FDR - die Fahrdynamikregelung von Bosch" verwiesen. Für die Eingriffe, die für die Erkennung der Kipptendenz bzw. die für die Umkippvermeidung durchgeführt werden, werden die Größen ST1 entsprechend modifiziert.

Um ein Umkippen des Fahrzeuges um eine in Längsrichtung des Fahrzeuges orientierte Fahrzeugachse zu vermeiden, kann neben Bremseingriffe durch Zurücknahme des Motormomentes eine Verminderung der Fahrzeuggeschwindigkeit erreicht werden. Auch kann durch radindividuelle Bremseingriffe gezielt dem Umkippen des Fahrzeuges entgegengewirkt werden. Hierzu wird bei einem Fahrzeug, welches vor dem Umkippen stark übersteuernd ist, und welches beim Umkippen über das kurvenäußere Vorderrad abrollt, durch einen gezielten Bremseneingriff an diesem kurvenäußeren Vorderrad ein Bremsmoment erzeugt. Dadurch ändern sich die Schlupfverhältnisse an diesem Rad dergestalt, daß nur noch geringe Seitenkräfte übertragbar sind und die Umkippgefahr somit reduziert wird.

Außerdem kann durch Eingriffe in die dem Fahrzeug zugeordneten Fahrwerksaktuatoren eine Wankbewegung des Fahrzeuges begrenzt werden.

Im Block 210, der Ansteuerlogik, werden die vom Regler 209 erzeugten Größen ST1 in Ansteuersignale für den Motor 211 sowie in Ansteuersignale für die Aktuatoren des Fahrzeuges umgesetzt. Bei den Aktuatoren handelt es sich beispielsweise um Fahrwerksaktuatoren 212ixj, mit denen das Verhalten des Fahrwerkes beeinflußbar ist, sowie um Aktuatoren 213ixj, mit denen an den entsprechenden Rädern eine Bremskraft erzeugbar ist. Zur Ansteuerung des Motors 211 erzeugt die Ansteuerlogik ein Signal motl, mit dem beispielsweise die Drosselklappenstellung des Motors beeinflußbar ist. Zur Ansteuerung der Fahrwerksaktuatoren 212ixj erzeugt die Ansteuerlogik 210 Signale Fsixj, mit denen die von den Fahrwerksaktuatoren 212ixj realisierte Dämpfung bzw. Steifigkeit beeinflußbar ist. Zur Ansteuerung der Aktuatoren 213ixj, die als Bremsen ausgebildet sind, erzeugt die Ansteuerlogik 210 Signale Aixj, mit denen die von den Aktuatoren 213ixj an den entsprechenden Rädern erzeugten Bremskräfte beeinflußbar sind. Die Ansteuerlogik 210 erzeugt Größen ST2, die dem Regler 209 zugeführt werden, und die eine Information über die Ansteuerung der einzelnen Aktuatoren enthalten.

Mit den Fahrwerksaktuatoren 212ixj wird das Fahrwerk des Fahrzeuges beeinflußt. Damit der Regler den Istzustand der Fahrwerksaktuatoren 212ixj kennt, werden ausgehend von den Fahrwerksaktuatoren 212ixj dem Regler 209 Signale Frixj zugeführt.

An dieser Stelle sei bemerkt, daß neben den in Figur 2 dargestellten Aktuatoren auch der Einsatz von sogenannten Retardern denkbar ist. Bei der in Figur 2 zum Einsatz kommenden Bremsanlage kann es sich um eine hydraulische oder pneumatische oder elektrohydraulische oder elektropneumatische Bremsanlage handeln.

In Figur 3 ist ein Ablaufdiagramm zur Beschreibung des im Block 208 ablaufenden erfindungsgemäßen Verfahrens dargestellt. Dadurch daß in der Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar. Das in Figur 3 verwendete Zeichen "u/o" soll die Abkürzung für die Verknüpfung "und/oder" darstellen.

Das Verfahren beginnt mit einem Schritt 301, in welchem die Größen omega, aq, delta sowie lambdaixj eingelesen werden. Die Größen omega, aq bzw. delta sind entweder mit Hilfe von entsprechenden Sensoren erfaßt worden oder aus den Raddrehzahlen hergeleitet worden. Im Anschluß an den Schritt 301 wird ein Schritt 302 ausgeführt.

Mit der im Schritt 302 stattfindenden Abfrage wird ermittelt, ob ein Fahrzustand vorliegt, bei dem eine Kipptendenz des Fahrzeuges um eine Längsrichtung des Fahrzeuges orientierte Fahrzeugachse auftreten kann. Hierzu wird ermittelt, ob der Betrag der Größe aq größer als ein erster Schwellenwert Sla ist und/oder ob der Betrag der Größe omega größer als ein zweiter Schwellenwert S1b ist. Ist im Schritt 302 wenigstens eine der beiden Teilabfragen erfüllt, so wird im Anschluß an den Schritt 302 ein Schritt 303 ausgeführt. Ist dagegen im Schritt 302 keine der beiden Teilabfragen erfüllt, so wird anschließend an den Schritt 302 erneut der Schritt 301 ausgeführt.

Im Schritt 303 werden, wie bereits oben beschrieben, die vom Abheben bedrohten Räder des Fahrzeuges ermittelt, d.h. es werden die Räder des Fahrzeuges ermittelt, die zur Erkennung einer Kipptendenz des Fahrzeuges geeignet sind.

Im Anschluß an den Schritt 303 wird ein Schritt 304 ausgeführt. In diesem Schritt 304 werden an wenigstens einem der vom Abheben bedrohten Rädern kurzzeitig Bremsmomente und/oder Antriebsmomente erzeugt und/oder verändert. Zu diesem Zweck werden die vom Block 206 erzeugten Größen SMixj und SM im Regler 209 und in der Ansteuerlogik 210 in entsprechende Ansteuersignale umgesetzt. Durch geeignete Ansteuerung des dem jeweiligen vom Abheben bedrohten Rades zugeordneten Aktuators 213ixj wird ein geringes Bremsmoment aufgebaut und/oder ergibt sich eine geringfügige Änderung eines bereits erzeugten Bremsmomentes. Durch geeignete Ansteuerung des dem Motor des Fahrzeuges zugeordneten Mittels und den den Rädern zugeordneten Aktuatoren 213ixj wird ein geringes Antriebsmoment erzeugt und/oder ergibt sich eine geringfügige Änderung eines bereits erzeugten Antriebsmomentes.

Für den Fall daß an den Rädern des Fahrzeuges keine individuellen Eingriffe durchführbar sind, können an allen Rädern des Fahrzeuges kurzzeitig Bremsmomente und/oder Antriebsmomente erzeugt und/oder verändert werden.

Im Anschluß an den Schritt 304 wird ein Schritt 305 ausgeführt. In diesem Schritt 305 wird für die vom Abheben bedrohten Räder jeweils die Änderung deltalambdaixja der das Radverhalten quantitativ beschreibenden Größe ermittelt. Die die Änderung deltalambdaixja beschreibende Größe wird während der Zeitdauer, in der die Bremsmomente und/oder die Antriebsmomente an dem jeweiligen Rad kurzzeitig erzeugt und/oder verändert werden und/oder nachdem die Bremsmomente und/oder die Antriebsmomente an dem jeweiligen Rad kurzzeitig erzeugt und/oder verändert wurden, ermittelt. An dieser Stelle sei bereits auf die noch zu beschreibende Figur 4 verwiesen. Anschließend an den Schritt 305 wird ein Schritt 306 ausgeführt.

Im Schritt 306 wird in Abhängigkeit der Größe deltalambdaixja ermittelt, ob für das Fahrzeug eine Kipptendenz um eine in Längsrichtung des Fahrzeuges orientierte Fahrzeugachse vorliegt. Eine Kipptendenz liegt dann vor, wenn der Betrag der Größe deltalambdaixja größer als ein entsprechender Schwellenwert S2 ist. In diesem Fall wird anschließend an den Schritt 306 ein Schritt 307 ausgeführt. Ist dagegen der Betrag der Größe deltalambdaixja kleiner als der Schwellenwert S2, was gleichbedeutend damit ist, daß keine Kipptendenz vorliegt, so wird im Anschluß an den Schritt 306 erneut der Schritt 301 ausgeführt.

Im Schritt 307 werden, aufgrund der Tatsache, daß eine Kipptendenz des Fahrzeuges um eine in Längsrichtung des Fahrzeuges orientierte Fahrzeugachse vorliegt, Bremseneingriffe und gegebenen falls Motoreingriffe und/oder Eingriffe an Fahrwerksaktuatoren durchgeführt, mit denen eine Stabilisierung des Fahrzeugs erreicht wird. Die Bremeneingriffe, d.h. die Eingriffe an den Aktuatoren 213ixj, und die Motoreingriffe dienen in erster Linie der Reduzierung der Fahrzeuggeschwindigkeit. Darüber hinaus können durch Bremseneingriffe an einzelnen Rädern in bekannter Weise stabilisierende Giermomente erzeugt werden. Hierbei sei auf die oben beschriebene Bremsung des kurvenäußeren Vorderrades verwiesen. Durch die Eingriffe an den Fahrwerksaktuatoren 212ixj kann die Wankbewegung des Fahrzeuges teilweise kompensiert und die Lage des Schwerpunktes beeinflußt werden.

Im Anschluß an den Schritt 307 wird erneut der Schritt 301 ausgeführt.

An dieser Stelle sei nochmals auf die Ermittlung der Änderung der das Radverhalten quantitativ beschreibenden Größe eingegangen. Diese Ermittlung ist auf folgende Arten denkbar: Zum einen kann die sich ergebende Änderung während der Zeitdauer, in der die Bremsmomente und/oder Antriebsmomente kurzzeitig erzeugt und/oder verändert werden, ermittelt werden. Erfindungsgemäß wird durch Berücksichtigung mehrerer Werte der das Radverhalten quantitativ beschreibenden Größe der Gradient dieser Größe lambdaixja ermittelt. Zum anderen kann die sich ergebende Änderung aus dem Wert, der vor der kurzzeitigen Erzeugung und/oder Veränderung der Bremsmomente und/oder Antriebsmomente vorlag und dem Wert der entsprechend nachher vorliegt, ermittelt werden. Zu diesem Zweck ist ersterer Wert in einem Speichermedium zwischenzuspeichern.

Mit Hilfe der Figuren 4 und 5 soll das zweite Ausführungsbeispiel beschrieben werden. Die im Zusammenhang mit Figur 2 gemachten Ausführungen bzgl. der Sensorik und des Reglers gelten auch für das in Figur 4 dargestellte Ausführungsbeispiel. Auf Blöcke bzw., Komponenten, die bereits im Zusammenhang mit Figur 2 beschrieben wurden, wird im Zusammenhang mit Figur 4 nicht mehr eingegangen.

Auch dem zweiten Ausführungsbeispiel liegt ein einteiliges Fahrzeug, wie es in Figur 1a dargestellt ist, zugrunde. Mit den Raddrehzahlsensoren 201ixj werden die Größen nixj ermittelt, die jeweils die Raddrehzahl des entsprechenden Rades 102ixj beschreiben. Die Größen nixj werden Blöcken 401 sowie 404 zugeführt. Ferner sei angenommen, daß das Fahrzeug 101 einen Querbeschleunigungssensor 202 sowie einen Gierratensensor 203 enthält. Die die Querbeschleunigung des Fahrzeugs beschreibende Größe aq wird sowohl dem Block 404 als auch einem Block 402 zugeführt. Die die Gierrate des Fahrzeuges beschreibende Größe omega wird den Blöcken 404, 401 sowie 402 zugeführt.

Die im Block 205 ermittelte Größe vf wird den Blöcken 401 bzw. 404 zugeführt. Ferner werden die im Block 205 ermittelten Größen lambdaixj sowohl dem Block 402 als auch dem Block 404 zugeführt.

Im Block 401 wird ausgehend von der Größe vf, den Größen nixj sowie der Größe omega die Größen rixj ermittelt, die das Radverhalten der Räder quantitativ beschreiben. Diese Größen rixj sind von der auf das jeweilige Rad wirkenden Radlast abhängig. Insbesondere handelt es sich bei den Größen rixj um die dynamischen Rollradien der Räder, die den Durchmesser bzw. entsprechend den Radius des jeweiligen Rades beschreiben, die mit Hilfe der Gleichung

$$rixj = \frac{vf \pm a \cdot omega}{nixj}$$

ermittelt werden, wobei die in der Gleichung enthaltene Größe a die halbe Spurweite des Fahrzeuges beschreibt. Für die kurvenäußeren Räder wird das Pluszeichen verwendet, für die kurveninneren Räder das Minuszeichen. Die das Radverhalten quantitativ beschreibenden Größen rixj werden ausgehend vom Block 401 dem Block 402 zugeführt.

Im Block 402 wird ausgehend von den ihm zugeführten Größen lambdaixj, rixj, aq, omega sowie den alternativ ihm zugeführten Größen mlix, die jeweils die achsbezogene Last beschreiben, die Erkennung, ob eine Kipptendenz des Fahrzeuges um eine Längsrichtung des Fahrzeuges orientierte Fahrzeugachse vorliegt, durchgeführt. Im Block 402 werden zur Erkennung, ob für das Fahrzeug eine Kipptendenz vorliegt, ausgehend von dem ihm zugeführten Größen verschiedene Abfragen durchgeführt. Diese verschiedenen Abfragen werden in der noch zu beschreibenden Figur 5 vorgestellt. Wird im Block 402 erkannt, daß für das Fahrzeug eine Kipptendenz um eine in Längsrichtung des Fahrzeuges orientierte Fahrzeugachse vorliegt, so wird eine Größe KT erzeugt, die dem Block 404 zugeführt wird. Durch diese Größe KT wird dem Regler bzw. Fahrzeugregler 404 mitgeteilt, ob eine Kipptendenz des Fahrzeuges vorliegt oder nicht. In Figur 4 sind die beiden im Steuergerät enthaltenen Komponenten 401 bzw. 402 zu einem Block 403 zusammengefaßt.

Mit 404 ist der im Steuergerät 104 implementierte Regler bzw. Fahrzeugregler bezeichnet. Der Regler 404 soll in seiner Grundfunktion dem Regler 208 in Figur 2 entsprechen. Zusätzlich zu der im Block 404 in der Grundfunktion implementierten Regelung ist im Regler 404 eine Umkippvermeidung implementiert. Diese Umkippvermeidung kann der Regelung der Grundfunktion quasi übergeordnet sein. Die Umkippvermeidung wird im wesentlichen ausgehend von den Größen KT ausgeführt.

Für eine Art der Umkipperkennung, die im Block 402 durchgeführt wird, sind im Block 402 die achsbezogenen Radlasten mlix erforderlich. Diese werden im Regler 404 beispielsweise in bekannter Weise aus den Raddrehzahlen ermittelt, und ausgehend vom Block 404 dem Block 402 zugeführt.

Der Regler 404 erzeugt Größen ST1, die der Ansteuerlogik 405, mit der die dem Fahrzeug zugeordneten Aktuatoren angesteuert werden, zugeführt werden. Mit den Größen ST1 wird der Ansteuerlogik 405 mitgeteilt, welche Aktuatoren wie angesteuert werden sollen. Dabei werden die Größen ST1 sowohl für die Regelung der Grundfunktion als auch für die Umkippvermeidung ermittelt. Bzgl. der Erzeugung der Größen ST1 gemäß der für die Grundfunktion implementierten Regelung wird auf die vorstehend aufgeführte Veröffentlichung "FDR - die Fahrdynamikregelung von Bosch" verwiesen. Für die Eingriffe, die für die Umkippvermeidung durchgeführt werden, werden die Größen ST1 entsprechend modifiziert.

Die zur Vermeidung des Umkippens des Fahrzeuges durchgeführten Eingriffe in die Aktuatoren des Fahrzeuges entsprechen denen, die im Zusammenhang mit Figur 2 beschrieben wurden.

Im Block 405, der Ansteuerlogik, werden die vom Regler 404 erzeugten Größen ST1 in Ansteuersignale für den Motor 211 sowie in Ansteuersignale für die Aktuatoren 212ixj, 213ixj des Fahrzeuges umgesetzt. Dies geschieht in entsprechender Weise wie im Zusammenhang mit Figur 2 beschrieben.

Mit den Fahrwerksaktuatoren 212ixj wird das Fahrwerk des Fahrzeuges beeinflußt. Damit der Regler den Istzustand der Fahrwerksaktuatoren 212ixj kennt, werden ausgehend von den Fahrwerksaktuatoren 212ixj dem Regler 208 Signale Frixj zugeführt.

An dieser Stelle sei bemerkt, daß neben den in Figur 2 dargestellten Aktuatoren auch der Einsatz von sogenannten Retardern denkbar ist. Bei der in Figur 2 zum Einsatz kommenden Bremsanlage kann es sich um eine hydraulische oder pneumatische oder elektrohydraulische oder elektropneumatische Bremsanlage handeln.

Mit Hilfe des in Figuren 5a und 5b dargestellten Ablaufdiagrammes soll der Ablauf des Verfahrens des zweiten Ausführungsbeispiels, wie es in Figur 4 dargestellt ist, beschrieben werden. Das erfindungsgemäße Verfahren läuft im wesentlichen im Block 403 ab. Das in Figur 5a verwendete Zeichens "u/o" entspricht dem in Figur 3.

Das Verfahren beginnt mit einem Schritt 501, in welchem die Größen nixj, omega, aqa, vf, lambdaixj sowie mlix eingelesen werden. Im Anschluß an den Schritt 301 wird ein Schritt 502 ausgeführt. Die im Schritt 502 stattfindende Abfrage entspricht der im Schritt 302 stattfindenden. Ist im Schritt 502 wenigstens eine der beiden Teilabfragen erfüllt, so wird im Anschluß an den Schritt 502 ein Schritt 503 ausgeführt. Ist dagegen im Schritt 502 keine der beiden Teilabfragen erfüllt, so wird anschließend an den Schritt 502 erneut der Schritt 501 ausgeführt.

Im Schritt 503 wird der Betrag der den Antriebs- und/oder Bremsschlupf beschreibende Größe lambdaixj mit einem Schwellenwert S2 verglichen. Die im Schritt 503 stattfindende Abfrage wird aus folgendem Grund durchgeführt: Die im Schritt 504 stattfindende Ermittlung der das Radverhalten quantitativ beschreibenden Größen rixj, die die dynamischen Rollradien der Räder darstellen, kann nur durchgeführt werden, wenn die Räder quasi schlupffrei sind, d.h., wenn der Antriebsund/oder Bremsschlupf der Räder kleiner als ein vorgegebener Schwellenwert ist. Ist dies nicht erfüllt, so können die das Radverhalten quantitativ beschreibenden Größen rixj nicht fehlerfrei ermittelt werden.

Wird im Schritt 503 festgestellt, daß der Betrag der Größe lambdaixj kleiner als der entsprechende Schwellenwert ist, so wird im Anschluß an den Schritt 503 der Schritt 504 ausgeführt, mit dem eine erste Art von Abfragen zur Erkennung einer Kipptendenz eingeleitet wird. Die erste Art der Abfragen setzt sich aus den Schritten 503 bis 506 zusammen. Wird dagegen im Schritt 503 festgestellt, daß der Betrag der Größe lambdaixj größer als der entsprechende Schwellenwert S2 ist, so wird anschließend an den Schritt 503 ein Schritt 508 ausgeführt, mit dem eine zweite Art von Abfragen zur Erkennung einer Kipptendenz eingeleitet wird. Die zweite Art der Abfragen besteht aus den Schritten 508 bis 510.

An dieser Stelle sei bemerkt, daß die in den einzelnen Schritten verwendete indizierte Darstellung, als Beispiel sei hier lambdaixj genannt, bedeuten soll, daß die einzelnen Schritte für ein beliebiges einzelnes Rad oder für eine beliebige Anzahl von Rädern oder für alle Räder des Fahrzeuges ausgeführt werden sollen.

Im Schritt 504 werden mit Hilfe der o.a. Gleichung die das Radverhalten quantitativ beschreibenden Größen ermittelt. Diese Größen können, wie bereits oben angedeutet, nur ermittelt werden, wenn kein allzu großer Radschlupf vorliegt, d.h. wenn die Radgeschwindigkeiten und die Fahrzeuggeschwindigkeit nicht allzusehr voneinander abweichen. Ist dies nicht gegeben, so kann es aufgrund der in diesem Fahrzeugzustand ermittelten Größen rixj, im Schritt 506 zu Fehlentscheidungen kommen. Anschließend an den Schritt 504 wird ein Schritt 505 ausgeführt. Im Schritt 505 werden die Größen deltarixj, rixjpunkt sowie alphaix ermittelt. Bei der Größe deltarixj handelt es sich um eine Differenz, die aus dem aktuellen Wert, der das Radverhalten quantitativ beschreibenden Größe rixj und einem Wert, der das Radverhalten quantitativ beschreibenden Größe, der bei einer Geradeausfahrt ermittelt wurde, gebildet wird.

Der Wert, der der das Radverhalten quantitativ beschreibenden Größe bei Geradeausfahrt entspricht, wird von Zeit zu Zeit in geeigneten Fahrsituationen ermittelt und in einem entsprechenden Speicher zwischengespeichert.

Bei der Größe rixjpunkt handelt es sich um eine Größe, die den zeitlichen Verlauf der das Radverhalten quantitativ beschreibenden Größe rixj darstellt. Insbesondere entspricht die Größe rixjpunkt der zeitlichen Ableitung der Größe rixj. Bei der Größe alphaix handelt es sich um eine den Neigungswinkel einer Radachse beschreibende Größe. Die Größe alphaix wird gemäß der Gleichung

$$\text{alpahix} = \left| \frac{\text{rixl - rixr}}{2 \cdot a} \right|$$

ermittelt. Wie diese Gleichung zeigt, wird ausgehend, von den für die beiden Räder der Radachse ermittelten Größen, die jeweils das Radverhalten quantitativ beschreiben, eine die Neigung der Radachse beschreibende Größe ermittelt. Außerdem geht in die Größe alphaix die Spurweite 2a des Fahrzeuges ein. Obige Gleichung für den Neigungswinkel alphaix stellt eine Näherung dar, die für kleine Winkel alphaix gilt.

Im Anschluß an den Schritt 505 wird ein Schritt 506 ausgeführt. Mit Hilfe des Schrittes 506 wird erkannt, ob für das Fahrzeug eine. Kipptendenz um eine in Längsrichtung des Fahrzeuges orientierte Fahrzeugachse besteht. Die im Schritt 506 aufgeführten Einzelabfragen werden unter Verwendung der im Schritt 505 ermittelten Größen, die wiederum in Abhängigkeit des im Schritt 504 ermittelten aktuellen Wertes der das Radverhalten quantitativ beschreibenden Größe rixj ermittelt werden, ausgeführt.

In einer ersten Teilabfrage wird ermittelt, ob der aktuelle Wert der Größe rixj größer als ein erster Schwellenwert S3a ist. Der erste Schwellenwert S3a soll dabei den Radius des unbelasteten Rades darstellen. Mit dieser Abfrage wird festgestellt, ob bei einer Kurvenfahrt die kurveninneren Räder abzuheben drohen. Die erste Teilabfrage enthält eine weitere Abfrage, mit der festgestellt wird, ob der aktuelle Wert der Größe rixj kleiner als ein zweiter Schwellenwert S3b ist. Mit dieser Abfrage werden Räder erfaßt, die sich auf der Kurvenaußenseite befinden, und die aufgrund einer Kipptendenz des Fahrzeuges stark zusammengedrückt werden. Mit Hilfe der ersten Teilabfrage wird somit die absolute Größe des dynamischen Rollradius zur Erkennung der Kipptendenz des Fahrzeuges mit entsprechenden Schwellenwerten verglichen. Eine Kipptendenz des Fahrzeuges liegt dann vor, wenn entweder der dynamische Rollradius eines kurveninneren Rades größer als der Schwellenwert S3a ist oder wenn der dynamische Rollradius eines kurvenäußeren Rades kleiner als der Schwellenwert S3b ist.

In einer zweiten Teilabfrage wird festgestellt, ob der Betrag der Differenz deltarixj größer als ein dritter Schwellenwert S3c ist. Mit dieser Abfrage wird die relative Änderung des dynamischen Rollradius, die sich bei einer Kurvenfahrt ausgehend von einer Geradeausfahrt ergibt, zur Erkennung, ob eine Kipptendenz des Fahrzeuges vorliegt, ausgewertet. Eine Kipptendenz des Fahrzeuges liegt dann vor, wenn der Betrag der Differenz größer als der entsprechende Schwellenwert S3c ist.

In einer dritten Teilabfrage wird festgestellt, ob der Betrag der Größe rixjpunkt, die den zeitlichen Verlauf der das Radverhalten quantitativ beschreibenden Größe rixj beschreibt, kleiner als ein vierter Schwellenwert S3d ist. Eine Kipptendenz des Fahrzeuges liegt dann vor, wenn der Betrag der den zeitlichen Verlauf beschreibenden Größe kleiner als der vierte Schwellenwert S3d ist.

In einer vierten Teilabfrage wird festgestellt, ob der Betrag der den Neigungswinkel einer Radachse beschreibenden Größe alphaix größer als ein fünfter Schwellenwert S3e ist. Eine Kipptendenz des Fahrzeuges liegt dann vor, wenn der Betrag der Größe alphaix größer als der Schwellenwert S3e ist.

Mit Hilfe der im Schritt 506 ablaufenden Teilabfragen wird die Kipptendenz eines Fahrzeuges dann erkannt, wenn wenigstens eine der vier Teilabfragen erfüllt ist. Ist wenigstens eine der Teilabfragen erfüllt, so wird im Anschluß an den Schritt 506 ein Schritt 507 ausgeführt. Die bei Vorliegen einer Kipptendenz im Block 402 stattfindende Ausgabe der Größe KT ist in Figur 5 nicht dargestellt. Ist im Schritt 506 keine der Teilabfragen erfüllt, d.h., liegt keine Kipptendenz des Fahrzeuges vor, so wird im Anschluß an den Schritt 506 erneut der Schritt 501 ausgeführt.

Im Schritt 507 werden, wie im Zusammenhang mit den Figuren 4 bzw. 2 erwähnt, entsprechende Bremseneingriffe und gegebenenfalls Motoreingriffe und/oder Fahrwerkseingriffe durchgeführt, um ein Kippen des Fahrzeuges um eine in Längsrichtung des Fahrzeuges orientierte Fahrzeugachse zu vermeiden.

Wird im Schritt 503 festgestellt, daß der Betrag der Größe lambdaixj größer als der entsprechende Schwellenwert S2 ist, so kann die erste Art der Erkennung nicht angewandt werden. Deshalb wird im Anschluß an den Schritt 503 ein Schritt 508 ausgeführt, mit dem eine zweite Art von Erkennung eingeleitet wird. Diese zweite Art der Erkennung wird in Abhängigkeit von der für wenigstens ein Rad in einem vorigen Zeitschritt ermittelten Größe, die das Radverhalten quantitativ beschreibt, durchgeführt. Im Schritt 508 wird eine die Schwerpunktshöhe des Fahrzeuges beschreibende Größe hsix, die insbesondere eine achsbezogene Schwerpunktshöhe darstellt, bereitgestellt. Hierzu wird beispielsweise die Größe hsix, die für einen vorigen Zeitschritt, bei dem die im Schritt 503 stattfindende Abfrage erfüllt war, und die zwischengespeichert war, eingelesen. Alternativ kann die Größe hsix in Abhängigkeit der Größen rixj, die für einen vorigen Zeitschritt, bei dem die im Schritt 503 stattfindende Abfrage erfüllt war, und die zwischengespeichert waren, ermittelt werden. Die achsbezogene Schwerpunktshöhe hsix wird allgemein gemäß der Gleichung

$$\text{hsix} = \frac{C \cdot a^2}{\text{mlix} \cdot \text{aq}} \cdot \text{alphaix}$$

ermittelt. In vorstehender Gleichung repräsentiert die Größe C die resultierende vertikale Steifigkeit der der Radachse zugeordneten Räder, die Größe a entspricht der halben Spurweite der Radachse, die Größe alphaix entspricht dem Neigungswinkel der Radachse gegenüber der Fahrbahn, die Größe mlix entspricht der auf die Radachse wirkenden Last und die Größe aq entspricht der auf das Fahrzeug wirkenden Querbeschleunigung. Dabei werden die Größen mlix, aq sowie alphaix beispielsweise des Zeitschrittes verwendet, zu dem die im Schritt 503 stattfindende Abfrage noch erfüllt war. Dies bedeutet in diesem Fall, daß die Größe mlix, die Größe aq sowie die Größe alphaix oder die für die Ermittlung der Größe alphaix erforderlichen Größen rixj laufend in einem Zwischenspeicher abgelegt werden müssen. Im Anschluß an den Schritt 508 wird ein Schritt 509 ausgeführt.

Im Schritt 509 wird in bekannter Weise, ausgehend von der die Schwerpunktshöhe des Fahrzeuges beschreibenden Größe hsix ein Geschwindigkeitsgrenzwert für die Kurvenfahrt des Fahrzeuges ermittelt. Der Geschwindigkeitsgrenzwert gibt die Geschwindigkeit für das Fahrzeug an, bei dem ein Kippen des Fahrzeuges um eine in Längsrichtung des Fahrzeuges orientierte Fahrzeugachse nicht zu erwarten ist. Zur Ermittlung des Geschwindigkeitsgrenzwertes in Abhängigkeit der die Schwerpunktshöhe des Fahrzeuges beschreibenden Größe sei beispielsweise auf die im "Kraftfahrtechnischen Taschenbuch", VDI-Verlag, 21. Auflage, auf Seite 346 stehende Formel verwiesen. Im Anschluß an den Schritt 509 wird ein Schritt 510 ausgeführt. Im Schritt 510 wird festgestellt, ob der Betrag der Differenz, die aus der Fahrzeuggeschwindigkeit und dem Geschwindigkeitsgrenzwert gebildet wird, kleiner gleich einem Schwellenwert S4 ist. Ist der Betrag der Differenz kleiner gleich dem Schwellenwert S4, so liegt eine Kipptendenz des Fahrzeuges um eine in Längsrichtung des Fahrzeuges orientierte Fahrzeugachse vor, und im Anschluß an den Schritt 510 wird der Schritt 507 ausgeführt. Ist dagegen der Betrag der Differenz größer als der Schwellenwert S4, was gleichbedeutend damit ist, daß eine Kipptendenz des Fahrzeuges nicht vorliegt, so wird anschließend an den Schritt 510 der Schritt 501 ausgeführt.

Das in Figur 5 dargestellte Ablaufdiagramm ist in entsprechender Weise auch für eine Fahrzeugkombination anwendbar.

Mit Hilfe von Figur 6 soll abschließend der dem ersten erfindungsgemäßen Verfahren zugrundeliegende physikalische Sachverhalt dargestellt werden. In Figur 6 ist ein einteiliges Fahrzeug, wie es in Figur 1a dargestellt ist, schematisch dargestellt. Dies soll jedoch keine Einschränkung darstellen.

In Figur 6 ist eine Radachse 103ix mit den zugehörigen Rädern 102ixl bzw. 102ixr dargestellt. Ferner ist der mittels Aufhängungsvorrichtungen 605 bzw. 606 mit der Radachse 103ix verbundene Fahrzeugaufbau 601 dargestellt. In Figur 6 ist die Spurweite 2a des Fahrzeuges eingezeichnet. Ferner ist der achsbezogene Schwerpunkt S und die zugehörige achsbezogene Schwerpunktshöhe hsix eingezeichnet. Ebenso ist der Neigungswinkel alphaix der Radachse gegenüber dem Fahrbahnuntergrund eingezeichnet. Für das Fahrzeug liegt eine Kurvenfahrt nach links vor.

Wie Figur 6 zeigt, entstehen bei einer Kurvenfahrt Lastverlagerungen, das kurveninnere Rad 102ixl wird entlastet und kann in Extremsituationen den Bodenkontakt verlieren. Dabei ist es unerheblich, ob die Kurvenfahrt auf einer ebenen oder auf einer geneigten Fahrbahn stattfindet. Das kurvenäußere Rad 102ixr wird stärker belastet. Durch diese Lastverlagerung an den einzelnen Rädern ändert sich zum einen der jeweilige dynamische Rollradius rixj. Zum anderen geht an den kurveninneren Rädern die vom Rad übertragene Normalkraft gegen Null, wodurch nur noch geringe oder keine Umfangskräfte mehr durch den Reifen auf die Fahrbahn übertragen werden können. In einem solchen Zustand sind die Schlupfverhältnisse am entsprechenden Rad besonders empfindlich gegenüber Veränderungen der Raddynamik, die beispielsweise durch kurzzeitige Erzeugung und/oder Veränderung von Antriebsmomenten und/oder Bremsmomenten am jeweiligen Rad verursacht werden. Beides läßt sich zur Erkennung eines abhebenden Rades verwenden, was wiederum zur Erkennung der Kipptendenz des Fahrzeuges um eine in Längsrichtung des Fahrzeuges orientierte Fahrzeugachse verwendet wird.

**Patentansprüche**

1. Verfahren zur Stabilisierung eines Fahrzeuges bei Kipptendenz, mit dem ein Umkippen des Fahrzeuges vermieden wird, und bei dem bei Vorliegen einer Kipptendenz um eine in Längsrichtung des Fahrzeuges orientierte Fahrzeugachse wenigstens an wenigstens einem Rad des Fahrzeuges stabilisierende Bremseneingriffe durchgeführt werden, **dadurch gekennzeichnet,** **daß** für wenigstens ein Rad eine Größe (deltalambdaixja) ermittelt wird, die die Änderung des Schlupfes des jeweiligen Rades beschreibt, und/oder eine den Durchmesser oder den Radius des jeweiligen Rades beschreibende Größe (rixj) ermittelt wird, und **daß** in Abhängigkeit der Größe, die die Änderung des Schlupfes des jeweiligen Rades beschreibt oder in Abhängigkeit der den Durchmesser oder den Radius des jeweiligen Rades beschreibenden Größe ermittelt wird, ob für das Fahrzeug die Kipptendenz vorliegt.

2. Verfahren nach Anspruch 1, **dadurch gekennzeichnet,** **daß** die den Durchmesser oder den Radius des jeweiligen Rades beschreibende Größe wenigstens in Abhängigkeit einer die Raddrehzahl des entsprechenden Rades beschreibenden Größe (nixj), einer die Fahrzeuggeschwindigkeit beschreibenden Größe (vf), einer die Querdynamik des Fahrzeugs repräsentierenden Größe (omega) und einer die Geometrie des Fahrzeuges beschreibenden Größe (a) ermittelt wird.

3. Verfahren nach Anspruch 2, **dadurch gekennzeichnet,**
**daß** als die die Querdynamik des Fahrzeuges repräsentierende Größe eine die Gierrate (omega) des Fahrzeuges und/oder eine die Querbeschleunigung (aq) des Fahrzeuges beschreibende Größe ermittelt wird, und
**daß** die die Fahrzeuggeschwindigkeit beschreibende Größe wenigstens in Abhängigkeit von für die Räder ermittelten Größen (nixj), die die Raddrehzahlen beschreiben, ermittelt wird.

4. Verfahren nach Anspruch 1, **dadurch gekennzeichnet,**
**daß** für wenigstens ein Rad eine die Raddrehzahl beschreibende Größe und wenigstens eine die Querdynamik des Fahrzeuges repräsentierende Größe (omega, aq) ermittelt wird,
**daß** wenigstens in Abhängigkeit von einer der die Querdynamik des Fahrzeugs repräsentierenden Größen, an wenigstens einem Rad kurzzeitig Bremsmomente und/oder Antriebsmomente erzeugt und/oder verändert werden, und daß während die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einem Rad kurzzeitig erzeugt und/oder verändert wurden, für dieses wenigstens eine Rad, wenigstens in Abhängigkeit von der die Raddrehzahl dieses Rades beschreibenden Größe die das Radverhalten quantitativ beschreibende Größe ermittelt wird, wobei vorgesehen ist, daß während der Zeitdauer, in der die Bremsmomente und/oder die Antriebsmomente an dem wenigstens einen Rad kurzzeitig erzeugt und/oder verändert werden und/oder nachdem die Bremsmomente und/oder die Antriebsmomente an dem wenigstens einen Rad kurzzeitig erzeugt und/oder verändert wurden, die Größe ermittelt wird, die die Änderung des Schlupfes des jeweiligen Rades beschreibt.

5. Verfahren nach Anspruch 4, **dadurch gekennzeichnet,**
**daß** die Kipptendenz des Fahrzeuges dann vorliegt, wenn der Betrag der Größe, die die Änderung des Schlupfes des jeweiligen Rades beschreibt, größer als ein entsprechender Schwellenwert (S2) ist.

6. Verfahren nach Anspruch 4, **dadurch gekennzeichnet,**
**daß** wenigstens in Abhängigkeit einer der ermittelten die Querdynamik des Fahrzeuges repräsentierenden Größe (delta, omega, aq) festgestellt wird, welche Räder des Fahrzeuges zur Erkennung der Kipptendenz des Fahrzeuges geeignet sind, und daß die Erkennung der Kipptendenz anhand wenigstens eines dieser Räder durchgeführt wird, indem an wenigstens einem dieser Räder kurzzeitig Bremsmomente und/oder Antriebsmomente erzeugt und/oder verändert werden.

7. Verfahren nach Anspruch 6, **dadurch gekennzeichnet,**
**daß** hierbei die sich auf der Kurveninnenseite befindenden Räder des Fahrzeuges ausgewählt werden.

8. Verfahren nach Anspruch 1, **dadurch gekennzeichnet,**
**daß** für das Fahrzeug die Kipptendenz dann vorliegt,

- wenn für wenigstens ein Rad der Wert der den Durchmesser oder den Radius beschreibenden Größe größer als ein erster Schwellenwert (S3a) ist, oder wenn für wenigstens ein Rad der Wert der den Durchmesser oder den Radius beschreibenden Größe kleiner als ein zweiter Schwellenwert (S3b) ist, und/oder
- wenn für wenigstens ein Rad der Betrag einer Differenz (deltarixj), die aus dem Wert der den Durchmesser oder den Radius beschreibenden Größe und einem Vergleichswert gebildet wird, größer als ein entsprechender Schwellenwert (S3c) ist, und/oder
- wenn für wenigstens ein Rad der Betrag einer Größe (rixjpunkt), die den zeitlichen Verlauf der den Durchmesser oder den Radius beschreibenden Größe beschreibt, kleiner als ein entsprechender Schwellenwert (S3d) ist, und/oder
- wenn der Betrag einer den Neigungswinkel einer Radachse beschreibenden Größe (alphaix) größer als ein entsprechender Schwellenwert (S3e) ist.

9. Verfahren nach Anspruch 8, **dadurch gekennzeichnet,**
**daß** für die Räder der entsprechenden Radachse jeweils die den Durchmesser oder den Radius beschreibenden Größen ermittelt werden und in Abhängigkeit dieser Größen die den Neigungswinkel der Radachse beschreibende Größe ermittelt wird.

10. Verfahren nach Anspruch 8, **dadurch gekennzeichnet,**
**daß** für das Fahrzeug die Kipptendenz dann vorliegt, wenn der Betrag einer Differenz, die aus einer die Fahrzeuggeschwindigkeit beschreibenden Größe (vf) und einem Geschwindigkeitsgrenzwert (vg) gebildet wird, kleiner als ein entsprechender Schwellenwert (S4) ist.

**11.** Verfahren nach Anspruch 1, **dadurch gekennzeichnet,**
daß wenigstens am kurvenäußeren Vorderrad des Fahrzeuges stabilisierende Bremseneingriffe dergestalt durchgeführt werden, daß an diesem Rad ein Bremsmoment erzeugt und/oder erhöht wird.

**12.** Verfahren nach Anspruch 1, **dadurch gekennzeichnet, daß** zur Stabilisierung des Fahrzeuges ferner Motoreingriffe und/oder Eingriffe in Fahrwerksaktuatoren (212ixj) durchgeführt werden.

**13.** Verfahren zur Stabilisierung eines Fahrzeuges bei Kipptendenz, mit dem ein Umkippen des Fahrzeuges vermieden wird, bei dem ermittelt wird, ob für das Fahrzeug eine Kipptendenz um eine in Längsrichtung des Fahrzeuges orientierte Fahrzeugachse vorliegt, und an wenigstens einem Rad des Fahrzeuges stabilisierende Bremseneingriffe durchgeführt werden,
**dadurch gekennzeichnet,**
daß bei Vorliegen der Kipptendenz gezielt nur am kurvenäußeren Vorderrad des Fahrzeuges der stabilisierende Bremseneingriff durchgeführt wird.

**14.** Vorrichtung zur Stabilisierung eines Fahrzeuges bei Kipptendenz, mit der ein Umkippen des Fahrzeuges vermieden wird, und die Mittel (209, 210, 213i1j, 404, 405) enthält, mit denen bei Vorliegen einer Kipptendenz um eine in längsrichtung des Fahrzeuges orientierte Fahrzeugachse wenigstens an wenigstens einem Rad des Fahrzeuges stabilisierende Bremseneingriffe durchgeführt werden,
**dadurch gekennzeichnet,**
daß die Vorrichtung Mittel (207) enthält, mit denen für wenigstens ein Rad eine Größe (deltalambdaixja) ermittelt wird, die die Änderung des Schlupfes des jeweiligen Rades beschreibt und mit denen in Abhängigkeit dieser Größe ermittelt wird, ob für das Fahrzeug die Kipptendenz vorliegt, und/oder
daß die Vorrichtung Mittel (401) enthält, mit denen eine den Durchmesser oder den Radius des jeweiligen Rades beschreibende Größe (rixj) ermittelt wird, und die weitere Mittel (402) enthält, mit denen in Abhängigkeit der den Durchmesser oder den Radius des jeweiligen Rades beschreibenden Größe ermittelt wird, ob für das Fahrzeug die Kipptendenz vorliegt.

**Claims**

**1.** Method for stabilizing a vehicle with a tendency to roll over, with which method the vehicle is prevented from rolling over and in which, when there is a tendency to roll over about a vehicle axis orientated in the longitudinal direction of the vehicle, stabilizing braking interventions are at least carried out at at least one wheel of the vehicle, **characterized in that**, for at least one wheel, a variable (deltalambdaixja) is determined which describes the change in the slip of the respective wheel, and/or a variable (rixj) describing the diameter or the radius of the respective wheel is determined, and
**in that**, as a function of the variable which describes the change in the slip of the respective wheel or as a function of the variable describing the diameter or the radius of the respective wheel, it is determined whether the tendency to roll over is present for the vehicle.

**2.** Method according to Claim 1, **characterized in that** the variable describing the diameter or the radius of the respective wheel is determined at least as a function of a variable (nixj) describing the wheel speed of the corresponding wheel, a variable (vf) describing the velocity of the vehicle, a variable (omega) representing the lateral dynamics of the vehicle and a variable (a) describing the geometry of the vehicle.

**3.** Method according to Claim 2, **characterized in that** a variable describing the yawing rate (omega) of the vehicle and/or a variable describing the lateral acceleration (aq) of the vehicle are/is determined as the variable representing the lateral dynamics of the vehicle, and
**in that** the variable describing the velocity of the vehicle is determined at least as a function of variables (nixj) which are determined for the wheels and which describe the wheel speeds.

**4.** Method according to Claim 1, **characterized in that**, for at least one wheel, a variable describing the wheel speed and at least one variable (omega, aq) representing the lateral dynamics of the vehicle are determined,
**in that**, at least as a function of one of the variables representing the lateral dynamics of the vehicle, brake torques and/or drive torques are briefly generated and/or changed at at least one wheel, and
**in that**, while the brake torques and/or the drive torques are briefly generated and/or changed at the at least one wheel and/or after the brake torques and/or the drive torques have been briefly generated and/or changed at the at least one wheel, the variable which quantitatively describes the wheel behaviour is determined for this at least one wheel, at least as a function of the variable describing the wheel speed of this wheel, there being provision for the variable which describes the change in the slip of the respective wheel to be determined during the time period in which the brake torques and/or the drive torques are briefly generated and/or changed at the at least one wheel and/or after the brake torques and/or the drive torques have been briefly generated and/or changed at the at least one wheel.

**5.** Method according to Claim 4, **characterized in that** the tendency of the vehicle to roll over is present if the absolute value of the variable which describes the change in the slip of the respective wheel is greater than a corresponding threshold value (S2).

**6.** Method according to Claim 4, **characterized in that**, at least as a function of one of the determined variables (delta, omega, aq) representing the lateral dynamics of the vehicle, it is determined which wheels of the vehicle are suitable for detecting the tendency of the vehicle to roll over, and **in that** the detection of the tendency to roll over is carried out with reference to at least one of these wheels **in that** brake torques and/or drive torques are briefly generated and/or changed at at least one of these wheels.

**7.** Method according to Claim 6, **characterized in that** the wheels of the vehicle on the inside of a bend are selected in the process.

**8.** Method according to Claim 1, **characterized in that** the tendency to roll over is present for the vehicle,

- if, for at least one wheel, the value of the variable describing the diameter or the radius is greater than a first threshold value (S3a), or
- if, for at least one wheel, the value of the variable describing the diameter or the radius is smaller than a second threshold value (S3b) and/or
- if, for at least one wheel, the absolute value of a difference (deltarixj) which is formed from the value of the variable describing the diameter or the radius and a comparison value is greater than a corresponding threshold value (S3c), and/or
- if, for at least one wheel, the absolute value of a variable (rixjpunkt) which describes the variation over time of the variable describing the diameter or the radius is smaller than a corresponding threshold value (S3d), and/or
- if the absolute value of a variable (alphaix) describing the angle of inclination of a wheel axis is greater than a corresponding threshold value (S3e).

**9.** Method according to Claim 8, **characterized in that**, for the wheels of the corresponding wheel axis, in each case the variables describing the diameter or the radius are determined and the variable describing the angle of inclination of the wheel axis is determined as a function of these variables.

**10.** Method according to Claim 8, **characterized in that**, for the vehicle, the tendency to roll over is present if the absolute value of a difference which is formed between the variable (vf) describing the velocity of the vehicle and a limiting value (vg) of the velocity is smaller than a corresponding threshold value (S4).

**11.** Method according to Claim 1, **characterized in that** stabilizing brake interventions at at least the front wheel of the vehicle on the outside of the bend are carried out to the effect that a brake torque is generated and/or increased at this wheel.

**12.** Method according to Claim 1, **characterized in that**, in order to stabilize the vehicle, further engine interventions and/or interventions into chassis actuators (212ixj) are carried out.

**13.** Method for stabilizing a vehicle in the event of a tendency to roll over, with which method the vehicle is prevented from rolling over and in which it is determined whether a tendency to roll over about a vehicle axis orientated in the longitudinal direction of the vehicle is present for the vehicle, and stabilizing brake interventions are carried out at at least one wheel of the vehicle, **characterized in that** when the tendency to roll over is present, the stabilizing braking intervention is carried out selectively only at the front wheel of the vehicle on the outside of the bend.

**14.** Device for stabilizing a vehicle in the event of a tendency to roll over, with which device the vehicle is prevented from rolling over, and which device contains means (209, 210, 213i1j, 404, 405) with which, when a tendency to roll over about a vehicle axis orientated in the longitudinal direction of the vehicle is present, stabilizing braking interventions are carried out at least at at least one wheel of the vehicle, **characterized in that** the device contains means (207) with which, for at least one wheel, a variable (deltalambdaixja) is determined which describes the change in the slip of the respective wheel and with which as a function of this variable it is determined whether the tendency to roll over is present for the vehicle, and/or
**in that** the device contains means (401) with which a variable (rixj) describing the diameter or the radius of the respective wheel is determined, and which contains further means (402) with which as a function of the variable describing the diameter or the radius of the respective wheel it is determined whether the tendency to roll over is present for the vehicle.

## Revendications

1. Procédé de stabilisation d'un véhicule à tendance à basculement, selon lequel on évite le basculement du véhicule et en cas de tendance au basculement autour d'un axe du véhicule orienté dans la direction longitudinale du véhicule, on effectue au moins des interventions de frein stabilisantes au moins sur une roue du véhicule,
   **caractérisé en ce que**
   pour au moins une roue on détermine une grandeur (deltalambdaixja) qui décrit une variation du patinage de la roue respective et/ou une grandeur (rixj) qui décrit le diamètre ou le rayon de la roue respective et en fonction de la grandeur qui décrit la variation du patinage de la roue respective ou en fonction de la grandeur qui détermine le diamètre ou le rayon de la roue respective, on détermine si le véhicule est en situation de tendance au basculement.

2. Procédé selon la revendication 1,
   **caractérisé en ce qu'**
   on détermine la grandeur décrivant le diamètre ou le rayon de la roue respective au moins en fonction d'une grandeur (nixj) décrivant là vitesse de rotation de la roue respective, une grandeur (vf) décrivant la vitesse du véhicule, une grandeur (oméga) représentant la dynamique transversale du véhicule et une grandeur (a) décrivant la géométrie du véhicule.

3. Procédé selon la revendication 2,
   **caractérisé en ce que**
   comme grandeur représentant la dynamique transversale du véhicule on détermine la vitesse de lacets (oméga) du véhicule et ou une grandeur décrivant l'accélération transversale (aq) du véhicule et la grandeur décrivant la vitesse du véhicule se détermine au moins en fonction des grandeurs (nixj) déterminées pour les roues et décrivant les vitesses de rotation des roues.

4. Procédé selon la revendication 1,
   **caractérisé en ce que**
   pour au moins une roue on détermine une grandeur décrivant la vitesse de rotation de la roue, et au moins une grandeur (oméga, aq) représentant la dynamique transversale du véhicule,
   au moins en fonction d'une grandeur représentant la dynamique transversale du véhicule, sur au moins une roue on génère et/ou on modifie brièvement le couple de freinage et/ou le couple moteur et pendant que l'on génère et/ou modifie le couple de freinage et/ou le couple moteur, brièvement, d'au moins une roue, et/ou après avoir généré et/ou modifié brièvement le couple de freinage et/ou le couple moteur d'au moins une roue, on détermine pour au moins cette roue, au moins en fonction de la grandeur décrivant la vitesse de rotation de cette roue, la grandeur qui décrit quantitativement le comportement de la roue, et il est prévu que pendant la durée au cours de laquelle on crée et/ou on modifie brièvement le couple de freinage et/ou moteur d'au moins une roue et/ou après avoir créé et/ou modifié brièvement le couple de freinage et/ou le couple moteur d'au moins une roue, on détermine la grandeur qui décrit la variation du patinage de la roue respective.

5. Procédé selon la revendication 4,
   caractérilsé en ce qu'
   on est en présence d'une tendance au basculement du véhicule si le module de la grandeur qui décrit la variation du patinage de la roue respective est supérieur à un seuil correspondant (S2).

6. Procédé selon la revendication 4,
   **caractérisé en ce qu'**
   au moins en fonction de l'une des grandeurs (delta, oméga, aq) représentant la dynamique transversalement du véhicule, on détermine la roue du véhicule qui convient pour détecter la tendance au basculement du véhicule et
   on effectue la détection de la tendance au basculement à l'aide d'au moins l'une des roues **en ce que** sur au moins l'une de ces roues on génère et/ou on modifie brièvement le couple de freinage et/ou le couple moteur.

7. Procédé selon la revendication 6,
   **caractérisé en ce qu'**
   on sélectionne les roues du véhicule qui se trouvent du côté intérieur de la courbe.

8. Procédé selon la revendication 1,
   **caractérisé en ce que**
   pour le véhicule on est en tendance de basculement

   - si pour au moins une roue, la valeur de la grandeur décrite par le diamètre ou le rayon est supérieure à un premier seuil (S3a) ou si pour au moins une roue la valeur de la grandeur décrivant le diamètre ou le rayon est inférieure à un second seuil (S3b) et/ou
   - si pour au moins une roue le module de la différence (deltarixj) formé à partir de la valeur de la grandeur décrivant le diamètre ou le rayon est d'une grandeur de comparaison est supérieur à un seuil correspondant (S3c) et/ou
   - si pour au moins un roue, le module d'une grandeur (rixj•) décrivant l'évolution dans le temps de la grandeur décrivant le diamètre ou le rayon est inférieur à un seuil correspondant à (S3d) et/ou
   - si le module d'une grandeur (alphaix), décrivant l'angle d'inclinaison d'un essieu de roue est supérieur à un seuil correspondant (S3e).

9. Procédé selon la revendication 8,
**caractérisé en ce que**
pour les roues de l'essieu correspondant on détermine chaque fois les grandeurs décrivant le diamètre ou le rayon et en fonction de ces grandeurs on détermine la grandeur décrivant l'angle d'inclinaison de l'essieu de roue.

10. Procédé selon la revendication 8,
**caractérisé en ce que**
le véhicule a tendance au basculement si le module d'une différence formé à partir de la grandeur (vf) décrivant la vitesse du véhicule et d'une valeur limite de vitesse (vg) est inférieur à un seuil correspondant (S4).

11. Procédé selon la revendication 1,
**caractérisé en ce qu'**
au moins sur la roue avant du véhicule, à l'extérieur de la courbe, on effectue une intervention de frein, de stabilisation, pour créer sur cette roue un couple de freinage et/ou l'augmenter.

12. Procédé selon la revendication 1,
**caractérisé en ce que**
pour stabiliser le véhicule on effectue en outre des interventions sur le moteur et/ou des interventions sur les actionneurs du châssis (212ixj).

13. Procédé de stabilisation pour éviter un basculement d'un véhicule ayant tendance au basculement, et selon lequel on détermine si le véhicule a tendance au basculement autour d'un axe du véhicule orienté suivant l'axe longitudinal du véhicule et on effectue des interventions de frein stabilisantes sur au moins une roue du véhicule,
**caractérisé en ce qu'**
en présence de la tendance au basculement on effectue de manière intentionnelle seulement une intervention de frein de stabilisation sur la roue avant à l'extérieur de la courbe du véhicule.

14. Dispositif de stabilisation pour éviter le basculement d'un véhicule ayant tendance au basculement et comprenant des moyens (209, 210, 213ilj, 404, 405) à l'aide desquels, lorsque se présente une tendance au basculement autour d'un axe du véhicule orienté dans la direction longitudinale du véhicule, sur au moins une roue du véhicule, on effectue des interventions de frein stabilisantes,
**caractérisé par**
des moyens (207) à l'aide desquels pour au moins une roue on détermine une grandeur (deltalambdaixja) qui décrit la variation du patinage de la roue respective et à l'aide de ces moyens, en fonction de cette grandeur, on détermine s'il y a tendance au basculement pour le véhicule, et/ou
des moyens (401) à l'aide desquels on détermine une grandeur (rixj) décrivant la diamètre ou le rayon de la roue respective, et d'autres moyens (402) qui déterminent si le véhicule a tendance à basculer en fonction des grandeurs décrivant le diamètre ou le rayon de la roue respective.

## Fig. 1a

102v1r  102v2r  102h2r  102h1r

103v1  103v2  103h2  103h1

101

104

102v1l  102v2l  102h2l  102h1l

## Fig. 1b

107vrz  105  107hrz  106  107h2ra  107h1ra

108vz  108hz  108h2a  108h1a

109

107vlz  107hlz  107h2la  107h1la

**Fig. 2**

# Fig. 3

omega, aq, delta lambdaixj einlesen  —301

|aq| > S1a
u/o
|omega| > S1b
? —302   N →

J

Ermittlung der vom Abheben bedrohten Räder  —303

Kurzzeitige Erzeugung und/oder Veränderung von Bremsmomenten und/oder Antriebsmomenten an den vom Abheben bedrohten Rädern  —304

Ermittlung von deltalambdaixja für die vom Abheben bedrohten Räder  —305

|deltalambdaixja| > S2
?  —306   N →

J

Bremseneingriff und/oder Motoreingriff und/oder Fahrwerkseingriff  —307

# Fig. 4

EP 1 030 798 B1

# Fig. 5a

nixj, omega, aq, vf
lambdaixj,mlix
einlesen — 501

|aq| > S1a
u/o
|omega| > S1b
? — 502

N → B

J

|lambdaixj| < S2
? — 503

N

J

504 — rixj ermitteln

505 — deltarixj,rixjpunkt,
alphaix ermitteln

hsix eines vorigen
Zeitschrittes
bereitstellen — 508

vg ermitteln — 509

|vf - vg| ≤ S4
? — 510

N → B

J

A

C

# Fig.5b

(A)

$$\left(\begin{array}{l} rixj > S3a \\ rixj < S3b \end{array}\right)$$
und/oder
$|deltarixj| > S3c$
und/oder
$|rixjpunkt| < S3d$
und/oder
$|alphaix| > S3e$
?

506

(B)

N

J

(C)

Bremseneingriff
und/oder
Motoreingriff
und/oder
Fahrwerkseingriff

507

(B)

# Fig. 6